# EUROPÄISCHE PATENTSCHRIFT

(11) **EP 2 924 319 B1**
(45) Veröffentlichungstag und Bekanntmachung des Hinweises auf die Patenterteilung: **19.04.2017**
(21) Anmeldenummer: 14401114.5
(22) Anmeldetag: 16.12.2014
(51) Int. Cl.: F16H 3/66, B62M 1/32, B62M 11/16, B62K 3/16, B62M 11/18, B62M 11/14

(54) **Lastschaltbare Mehrgangplanetengetriebe**
Power shift multi-gear planetary gear unit
Train planétaire à plusieurs rapports embrayable sous charge

(30) Priorität: 12.02.2014 DE 102014101726
(43) Veröffentlichungstag der Anmeldung: 30.09.2015
(73) Patentinhaber: ÖZCAN, Umut, 70376 Stuttgart (DE)
(72) Erfinder: ÖZCAN, Bayram, 70376 Stuttgart (DE)

(56) Entgegenhaltungen:
- DE-A1-102009 056 206
- JP-U- H0 514 708
- "DAS NEUNGANG-AUTOMATIKGETRIEBE 9G-TRONIC VON MERCEDES-BENZ", , 31. Januar 2014 (2014-01-31), XP055175590, Gefunden im Internet: URL:http://download.springer.com/static/pd f/181/art%3A10.1007%2Fs35148-014-0012-3.pd f?auth66=1426248756_78b6cdb924a4a3cedf89e9 1536aaa6ee&ext=.pdf [gefunden am 2015-03-11]
- WAGNER G ET AL: "Achtgang-Automatikgetriebe zur Reduzierung des Kraftstoffverbrauchs", ATZ AUTOMOBILTECHNISCHE ZEITSCHRIFT, VIEWEG PUBLISHING, WIESBADEN, DE, Bd. 109, Nr. 6, 1. Juni 2007 (2007-06-01), Seiten 512-519, XP001519640, ISSN: 0001-2785

## Beschreibung

Die Erfindung bezieht sich auf ein lastschaltbares Mehrgangplanetengetriebe zur Verwendung in Personenfahrzeugen, Lastkraftfahrzeugen, Nutzfahrzeugen, Landmaschinen, Baufahrzeugen, Diesellokomotiven, Windkraftanlagen, Fahrräder, Motorrad, Mopeds, Krafträder, Trethebel-Fahrrädern, etc.

### Stand der Technik

Mehrgangplanetengetriebe sind in zahlreichen Ausführungsformen schon bekannt. Sie dienen dem Zweck, mehrere wählbare Gangstufen bzw. Übersetzungen zur Verfügung zu stellen.

DE102005014592A1, DE102010004304A1, DE19720796B4, DE4142867A1 sind einige Beispiele für Kraftfahrzeuge, Fahrräder usw.. Die aktuellen Getriebe besitzen keine ausreichende Gesamtübersetzung oder besitzen zu wenige Gangstufen. Ein Getriebe mit einer großen Gesamtübersetzung und kleingestuften Übersetzungen hat mehr Vorteile.

Die DE102009056206A1 offenbart in seiner Fig.1 ein lastschaltbares (siehe deren Absatz [0048]) Mehrgangplanetengetriebe mit einem Basisgetriebe mit einem dreistufigen Stufenplaneten und einem Erweiterungsgetriebe mit einem zweistufigen Stufenplaneten.

Die JP H05 14708 U offenbart in seiner Fig.1 ein lastschaltbares Mehrgangplanetengetriebe mit einem Basisgetriebe, einem Erweiterungsgetriebe und einer Schalteinrichtung, die jeweils eine Schaltkupplung zwischen den Hohlrädern und dem Gehäuse umfasst.

### Aufgabenstellung

Die vorliegende Erfindung hat die Aufgabe ein Mehrgangplanetengetriebe so auszubilden, dass es zahlreiche und wählbare Gangstufen hat, die kleinere Gangsprünge und eine größere Gesamtübersetzung aufweisen, sodass es bei motorisierten Fahrzeugen, großen Diesellokomotiven, Windkraftanlagen, Landmaschinen, Fahrrädern etc. effizienter verwendet werden kann.

Diese Aufgabe wird erfindungsgemäß durch ein lastschaltbares Mehrgangplanetengetriebe mit den Merkmalen des Patentanspruchs 1 und durch ein lastschaltbares Mehrgangplanetengetriebe mit den Merkmalen des Patentanspruchs 2 gelöst. Patentanspruch 3 betrifft eine besondere Ausführungsart der Erfindung.

Die in Anspruch 1 beanspruchte Kombination eines Basisgetriebes mit einem Erweiterungsgetriebe ermöglicht beispielsweise das Erreichen von 142 Vorwärtsgängen und 69 Rückwärtsgängen.

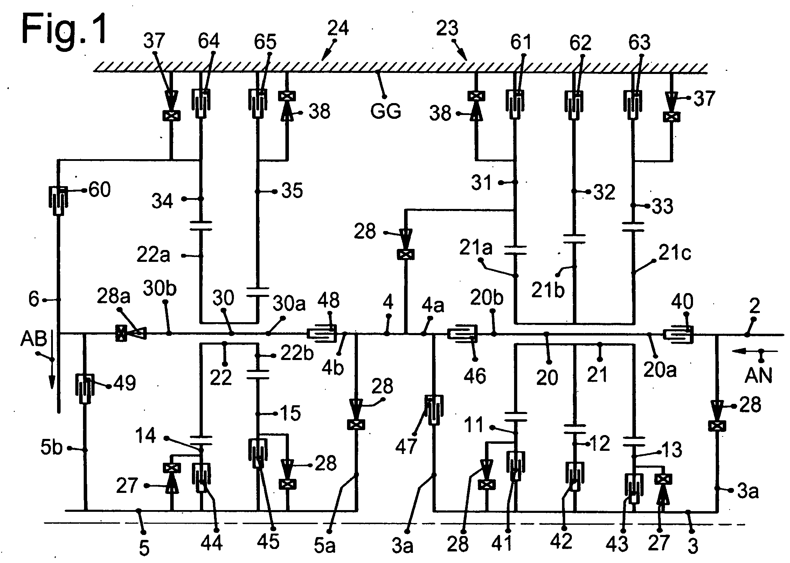

Nachfolgend wird die Erfindung in Verbindung mit den beiliegenden Zeichnungen anhand von ersten bis achten Ausführungsbeispielen genauer erklärt.
Es zeigen: Fig. 1 eine vereinfachte schematische Darstellung des Mehrgangplanetengetriebes für ein Fahrzeug mit 142 Vorwärts- und 69 Rückwärtsgängen;
Fig. 2 Eine vereinfachte schematische Darstellung des Mehrganggetriebes für ein Fahrzeug mit 77 Vorwärts- und 29 Rückwärtsgängen;
Fig. 3 und 4 jeweils einen Längsschnitt durch das lastschaltbare Mehrganggetriebe mit 77 Vorwärts- und 29 Rückwärtsgängen für ein Fahrzeug mit Zahnschaltkupplungen im zwei unterschiedlichen Perspektiven;
Fig. 5 Einen Längsschnitt durch das lastschaltbare Mehrganggetriebe mit 44 Vorwärts- und 10 Rückwärtsgängen für ein Fahrzeug mit Sägezahnschaltkupplungen;
Fig. 6 Einen Längsschnitt durch das lastschaltbare sequentielle Mehrganggetriebe für ein Fahrzeug mit Sägezahnschaltkupplungen und 44 Vorwärts- und 10 Rückwärtsgängen;
Fig. 7 Einen Längsschnitt durch das lastschaltbare Mehrganggetriebe mit 44 Gangstufen für ein Fahrrad;
Fig. 8 Einen Längsschnitt durch das lastschaltbare Mehrganggetriebe mit 44 Gangstufen im Kurbelrad eines Fahrrads;
Fig. 9 Einen Längsschnitt durch das lastschaltbare Mehrganggetriebe mit 42 Gangstufen für ein Trethebel-Rad;
Fig. 10 Einen Querschnitt durch das lastschaltbare Mehrganggetriebe gemäß Fig. 3 (Verkleinert);
Fig. 11 und 12 Einen Längsschnitt bzw. einen Querschnitt durch die Schaltkupplung 244 gemäß Fig.3 (vergrößert);
Fig. 13 Eine Längsschnitt durch die Schaltkupplung bzw. Schaltbremse 264 gemäß Fig. 3, Fig. 4 (Vergrößert);

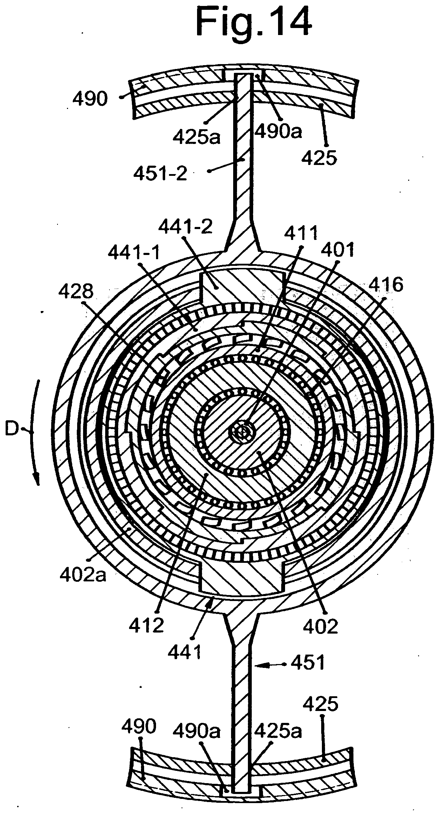

Fig. 14 Eine Querschnitt durch die Kupplungssteuerscheibe 451-2 gemäß Fig. 6;
Fig. 15 Eine Seitenansicht einer Sägezahnschaltkupplung 442 nach Fig. 6.(Vergrößert);
Fig. 16 Eine perspektivische Ansicht von einem Sperrelement 286, Exzenterwelle 292, eine Schaltmuffe 239 gemäß Fig. 3 (vergrößert);
Fig. 17 Eine perspektivische Explosionsdarstellung von einigen Antriebselementen des Trethebel-Rads gemäß Fig. 9 (vergrößert);

Die Übersetzung des Getriebes ist definiert als der Quotient von der Drehzahl der Eingangswelle zur Drehzahl der Ausgangswelle. Weiterhin werden die folgenden Abkürzungen verwendet: AB= Abtrieb, AN= Antrieb, D= Drehrichtung, FR= Fahrradrahmen, GG= Getriebegehäuse; G1 = 1. Vorwärtsgang, G44 = 44. Vorwärtsgang, RG1= 1. Rückwärtsgang, RG26 = 26. Rückwärtsgang, W=Welle, Pt = Planetenradträger; Ü.= Übersetzung; S= geschaltete Schaltkupplung; F= Freilaufkupplung, die im Kraftflusskette ist.

### Erstes Ausführungsbeispiel für motorisierte Fahrzeuge

Das Mehrgangplanetengetriebe enthält gemäß Fig.1 eine Antriebswelle 2, drei Zwischenwellen 3, 4, 5, eine Abtriebswelle 6. Das Basisgetriebe 23 besteht aus dem dreistufigen Planetenrad 21, drei Sonnenrädern 11, 12, 13 und drei Hohlrädern 31, 32, 33. Der Planetenträger 20 ist drehbar gelagert gemäß der Antriebsseite AN bzw. rechte Seite der Fig. 1. Die Achsen der dreistufigen Planetenradsätze 21 sitzen auf dem Planetenträger 20. Die Stufen der Planetenradsätze 21 sind miteinander fest verbunden oder bestehen aus einem Körper. Von rechts beginnend ist die erste Stufe 21c in kämmender Beziehung sowohl mit dem Sonnenrad 13 als auch dem Hohlrad 33 im Eingriff. Die zweite Stufe 21b ist in kämmender Beziehung sowohl mit dem Sonnenrad 12 als auch dem Hohlrad 32. Die letzte Stufe 21a ist in kämmender Beziehung sowohl mit dem Sonnenrad 11 als auch dem Hohlrad 31. Das Erweiterungsgetriebe 24 besteht aus einem zweistufigen Planetenrad 22, zwei Sonnenrädern 14, 15, zwei Hohlrädern 34, 35. Der Planetenträger 30 trägt die Planetenradsätze 22 und ist drehbar gelagert. Die Achsen der zweistufigen Planetenradsätze 22 sitzen auf dem Planetenträger 30. Die Stufen der Planetenradsätze 22 sind miteinander fest verbunden oder bestehen aus einem Körper. Die erste Stufe 22b ist in kämmender Beziehung sowohl mit dem Sonnenrad 15 als auch dem Hohlrad 35 im Eingriff. Die zweite Stufe 22a ist in kämmender Beziehung sowohl mit dem Sonnenrad 14 als auch dem Hohlrad 34 im Eingriff. Die Schalteinrichtung des Getriebes besitzt mehrere Schaltkupplungen 40 bis 49 und 60 bis 65. Die Kupplungen 40 bis 49 und 60 sind rotierende Schaltkupplungen, die Kupplungen 61 bis 65 sind Bremsen, die den dazugehörigen Hohlrad 31 bis 35 sperren. Das Getriebe besitzt mehrere Freilaufkupplungen 27, 28, 37, 38. Die Betriebsrichtung bzw. Sperrrichtung der Freilaufkupplung 27 und 37 in Bezug auf den Innenring ist identisch mit der Antriebsdrehrichtung des Getriebes. Die Betriebsrichtung der Freilaufkupplung 28 und 38 in Bezug auf den Innenring ist entgegengesetzt mit der Antriebsrichtung des Getriebes. Die Freilaufkupplung 27 und 28 bzw. 37 und 38 sind selbsttätige, nicht schaltbarer, Einweg-Freilaufkupplungen und sind somit gleiche Bauteile, die sich durch die Montage unterscheiden gemäß Fig. 1, wobei der Dreieckspfeil die Kraftflussrichtung der Freilaufkupplung andeutet. Die Freilaufkupplungen 27 und 28 sind rotierende, die Freilaufkupplungen 37 und 38 nicht rotierende Freilaufkupplungen. Die Zwischenwelle 3 hat die Verbindungsstellen 3a und 3b, die Zwischenwelle 5 hat die Verbindungsstellen 5a und 5b. Die Antriebswelle 2 wird vom Motor des Fahrzeugs angetrieben und ist somit die Eingangswelle des Getriebes. Die Ausgangswelle des Getriebes ist die Welle 6. Zwischen dem Motor und der Antriebswelle 2 kann eine Anfahrtskupplung eingebaut werden oder alternativ dazu kann eine interne Schaltkupplung des Getriebes als Anfahrkupplung angeordnet werden, z.B. die Freilaufkupplung 38 bzw. Bremse zwischen dem Hohlrad 31 und dem Getriebegehäuse GG kann als Schaltbremse ausgeführt werden. Zwischen der Antriebswelle 2 und dem Planetenträger 20 des Basisgetriebes 23 ist eine Schaltkupplung 40 angeordnet. Die Antriebswelle 2 treibt die Welle 3 durch eine Freilaufkupplung 28 in die Antriebsdrehrichtung an. Die Zwischenwelle 3 bzw. der Verbindungsstelle 3a ist mit drei Schaltkupplungen 41, 42, 43 für die Verbindungen mit den Sonnenrädern 11, 12, 13 vorgesehen. Zwischen dem Sonnenrad 13 und der Welle 3 ist parallel zu dem Schaltkupplung 43 eine Freilaufkupplung 27 montiert. Die Welle 3 treibt das Sonnenrad 13 durch die Freilaufkupplung 27 an. Zwischen dem Sonnenrad 11 und der Welle 3 ist eine Freilaufkupplung 28 parallel zur Schaltkupplung 41 montiert. Das Sonnenrad 11 treibt die Welle 3 durch die Freilaufkupplung 28 an. Zwischen dem Sonnenrad 14 und der Welle 5 befindet die Schaltkupplung 44. Zwischen dem Sonnenrad 15 und der Welle 5 befindet die Schaltkupplung 45. Eine Freilaufkupplung 27 ist zwischen dem Sonnenrad 14 und der Welle 5 montiert. dadurch treibt die Welle 5 das Sonnenrad 14 an. Zwischen dem Sonnenrad 15 und der Welle 5 ist eine Freilaufkupplung 28 so montiert, dass das Sonnenrad 15 die Welle 5 antreibt. Zwischen dem Hohlrad 31, 32, 33 und dem Getriebegehäuse GG sind jeweils die Schaltkupplungen 61, 62, 63 angeordnet um die entsprechende Hohlrädern in die beide Drehrichtungen zu sperren. Zwischen dem Hohlrad 31 und dem Getriebegehäuse GG ist eine Freilaufkupplung 38 montiert um das Hohlrad 31 stetig nur in die entgegengesetzte Drehrichtung des Antriebswelle 2 zu sperren. Zwischen dem Hohlrad 33 und dem Getriebegehäuse GG ist eine Freilaufkupplung 37 montiert, um das Hohlrad 33 stetig nur in die Drehrichtung der Antriebswelle 2 zu sperren. Zwischen dem Hohlrad 34, 35 und dem Getriebegehäuse GG sind jeweils die Schaltkupplungen 64, 65 angeordnet um die entsprechende Hohlrädern in die beide Drehrichtungen zu sperren. Zwischen dem Hohlrad 35 und dem Getriebegehäuse GG ist eine Freilaufkupplung 38 montiert, um das Hohlrad 35 stetig, nur in die entgegengesetzte Drehrichtung der Antriebswelle 2 zu sperren. Zwischen dem Hohlrad 34 und dem Getriebegehäuse GG ist eine Freilaufkupplung 37 montiert, um das Hohlrad 34 stetig nur in die Drehrichtung der Antriebswelle 2 zu sperren.Zwischen dem Hohlrad 31 und der Welle 4 ist eine Freilaufkupplung 28 montiert, sodass das Hohlrad 31 stetig die Zwischenwelle 4 in die Drehrichtung der Antriebswelle 2 antreibt. Zwischen dem Planetenträgerende 20b des Planetenträgers 20 und der Zwischenwelle 4 ist eine Schaltkupplung 46 montiert. Zwischen der Wellen 3 und 4 ist eine Schaltkupplung 47 angeordnet. Zwischen der Welle 4 und der Welle 5 ist eine Freilaufkupplung 28 montiert, sodass die Welle 4 die Welle 5 stetig nur in die Antriebsrichtung der Antriebswelle 2 antreibt. Eine Schaltkupplung 48 ist zwischen der Welle 4 und dem Planetenträger 30 montiert. Zwischen dem Planetenträger 30 und der Abtriebswelle 6 ist eine ausschaltbare Freilaufkupplung 28a montiert. Durch die ausschaltbare Freilaufkupplung 28a treibt das Planetenträger 30 die Abtriebswelle 6 nur bei Vorwärtsgängen des Getriebes und nur in die Antriebsdrehrichtung der Antriebswelle 2 an. Zwischen der Welle 5 und der Abtriebswelle 6 ist eine Schaltkupplung 49 angeordnet. Für die Rückwärtsgänge des Getriebes ist zwischen dem Hohlrad 34 und der Abtriebswelle 6 eine Schaltkupplung 60 montiert. Bei allen 142 Vorwärtsgängen werden beide Teilgetriebe, also Basisgetriebe 23 und Erweiterungsgetriebe 24, folgendermaßen geschaltet: Vom 1. Gang bis zum 98. Gang ist das Basisgetriebe 23 als Untersetzergetriebe geschaltet. Vom 1. Gang bis zum 23. Gang wird eines der Sonnenräder 11, 12, 13 durch die Antriebswelle 2 bzw. über die Zwischenwelle 3 angetrieben, eine Hohlrad 32 oder 33 im entgegengesetzte Antriebsdrehrichtung des Getriebes gesperrt und das Hohlrad 31 durch eine Freilaufkupplung 28 mit dem Zwischenwelle 4 verbunden. Vom 24. Gang bis 98. Gang wird der Planetenträger 20 mit der Welle 4 verbunden und eines der Hohlräder 31, 32, 33 des Basisgetriebes wird in die entgegengesetzte Drehrichtung des Getriebes gesperrt. Vom 99. Gang bis zum 142. Gang ist das Basisgetriebe 23 als Übersetzergetriebe geschaltet, sodass der Planetenträger 20 durch die Antriebswelle 2 angetrieben wird und eines der Sonnenräder 11, 12, 13 mit der Welle 4 verbunden wird. Das Basisgetriebe 23 arbeitet bei den Gangstufen 57 bis 65 als Untersetzergetriebe und in den Gangstufen 101 bis 109 als Übersetzergetriebe ohne das Erweiterungsgetriebe 24. In den restlichen Vorwärtsgangstufen sind Basisgetriebe 23 und Erweiterungsgetriebe 24 in Reihe geschaltet. Das Erweiterungsgetriebe 24 ist bei den Gangstufen 1 bis 56 und 99, 100 als Untersetzergetriebe geschaltet. Das Erweiterungsgetriebe 24 ist bei den Gangstufen 66 bis 98 und 110 bis 142 als Übersetzergetriebe geschaltet. Die ausschaltbare Freilaufkupplung 28a zwischen dem Planetenträgerende 30b und der Abtriebswelle 6 wird bei den Rückwärtsgängen außer Betrieb gesetzt. Eine Möglichkeit der Außerbetriebnahme der Freilaufkupplung 28a ist die Verwendung von einer ausschaltbaren Freilaufkupplung. Die Steuerung des Getriebes kann so eingerichtet werden, dass z.B. die Freilaufkupplung 28a durch einen Schalthebel ausgeschaltet wird, soweit die Schaltkupplungen 60 eingeschaltet ist, da die Schaltkupplung 60 ausschließlich bei den Rückwärtsgängen geschaltet ist. Bei einem Richtungswechsel des Getriebes wird eine Kraftflussunterbrechung stattfinden. Ohne die Außerbetriebnahme der Freilaufkupplung 28a wird das Getriebe in den Rückwärtsgängen blockiert. Bei den Rückwärtsgängen wird das Hohlrad 35 durch die dazugehörige Schaltkupplung 65 in Antriebsdrehrichtung gesperrt und das Hohlrad 34 wird durch die Schaltkupplung 60 mit der Abtriebswelle 6 verbunden. Das Schaltschema des Mehrgangplanetengetriebes ist in den Tabellen 2a bis 2d für die Vorwärtsgänge und in der Tabelle 2e und 2f für die Rückwärtsgänge dargestellt. Die 83. Gangstufe ist der Direktgang. In den Tabellen bezeichnet das Symbol "S" eine geschaltete Schaltkupplung und das Symbol "F" eine Freilaufkupplung, die im Betrieb ist. Zum Beispiel ist in der 1. Gangstufe nur eine Schaltkupplung 62 geschaltet und die restliche Elemente werden durch Freilaufkupplungen verbunden, sodass die Kraftübertragung von der Antriebswelle 2 zur Abtriebswelle 6 über diese Freilaufkupplungen erfolgt. Im Detail ist die Kraftflusskette für die 1. Gangstufe wie folgt: Antriebswelle 2, Freilaufkupplung 28, Verbindungsstelle 3a, Freilaufkupplung 27, Sonnenrad 13, Hohlrad 31, Freilaufkupplung 28, Zwischenwelle 4, Freilaufkupplung 28, Verbindungsstelle 5a, Freilaufkupplung 27, Sonnenrad 14, Planetenträgerende 30b, ausschaltbare Freilaufkupplung 28a, Abtriebswelle 6. Eine Freilaufkupplung 38 sperrt das Hohlrad 35 entgegen der Antriebsrichtung des Getriebes, die Schaltkupplung 62 sperrt das Hohlrad 32. In der 142. Gangstufe, gemäß Tabelle 2d letzte Spalte, sind die Schaltkupplungen 40, 43, 61, 65, 44, 47, 48, 49, geschaltet. Das Schaltschema alle Gangstufen kann aus den Tabellen 5a bis 5f entnommen werden. In diesen Tabellen zeigt die erste bis dritte Spalte die Verbindungselemente des Getriebes an, die bei der entsprechenden Gangstufe verbunden werden, wie z.B. Sonnenrad, Hohlrad oder eine Welle. Die vierte Spalte zeigt die dazugehörigen Schaltkupplungen. Die Funktionsweise der Freilaufkupplungen, die parallel zu den Schaltkupplungen der Sonnenräder oder Hohlräder angeordnet sind, wird im Folgenden beispielhaft erläutert: Bei der Gangstufen 1 bis 14 treibt die Welle 5 das Sonnenrad 14 an. Die Schaltkupplung 44 muss nicht geschaltet werden, um das Sonnenrad 14 anzutreiben. In den Gangstufen, bei denen das Sonnenrad 14 die Welle 5 antreibt, z.B. in den Fällen 81 bis 98, 125 bis 142, wird die Schaltkupplung 44 geschaltet, da sich die Freilaufkupplung 27 im Freilaufbetrieb befindet und keine Kraft vom Sonnenrad 14 zur Welle 5 übertragen kann. Bei den Gangstufen 1 bis 98 ist das Basisgetriebe als Untersetzergetriebe geschaltet, wobei das entsprechende Hohlrad 31, 32, 33 nur in die entgegengesetzte Antriebsrichtung des Getriebes gesperrt wird. Das Hohlrad 31 wird in die entgegengesetzte Antriebsdrehrichtung durch die Freilaufkupplung 38 und in Antriebsdrehrichtung durch die Schaltkupplung 61 gesperrt. Das Hohlrad 33 wird in die entgegengesetzte Antriebsdrehrichtung durch die Schaltkupplung 63 und in Antriebsdrehrichtung durch die Freilaufkupplung 37 gesperrt. Dieses Prinzip gilt bei allen Sonnenrädern bzw. Hohlrädern, deren Freilaufkupplung und Schaltkupplung parallel angeordnet sind. Die räumliche Anordnung der Bauteile ist frei wählbar, solange das Schaltschema und die Schaltlogik des Getriebes eingehalten wird. Eine zusätzliche Bemerkung sei gegeben. Einige Gangstufen des Getriebes haben zwei Möglichkeiten der Realisierung und wird im Folgenden beispielhaft an einer Gangstufe erläutert. Zum Beispiel kann die 50. Gangstufe durch die Schaltung des Hohlrads 33 und des Sonnenrads 13 des Basisgetriebes 23 mit dem Hohlrad 34 und dem Sonnenrad 15 des Erweiterungsgetriebes 24 realisiert werden, wobei eine Übersetzung von 8,03657 erzielt wird. Alternativ dazu kann die 50. Gangstufe durch die Schaltung des Hohlrads 35 und des Sonnenrads 14 des Erweiterungsgetriebes 24 als Untersetzergetriebe realisiert werden, wobei eine Übersetzung von 8,2318 erzielt wird. Der Vorteil der ersten Möglichkeit ist die bessere Gangabstufung der Gangstufen, der Vorteil der zweiten Möglichkeit ist der bessere Wirkungsgrad des Getriebes.

### Zweites Ausführungsbeispiel für motorisierte Fahrzeuge

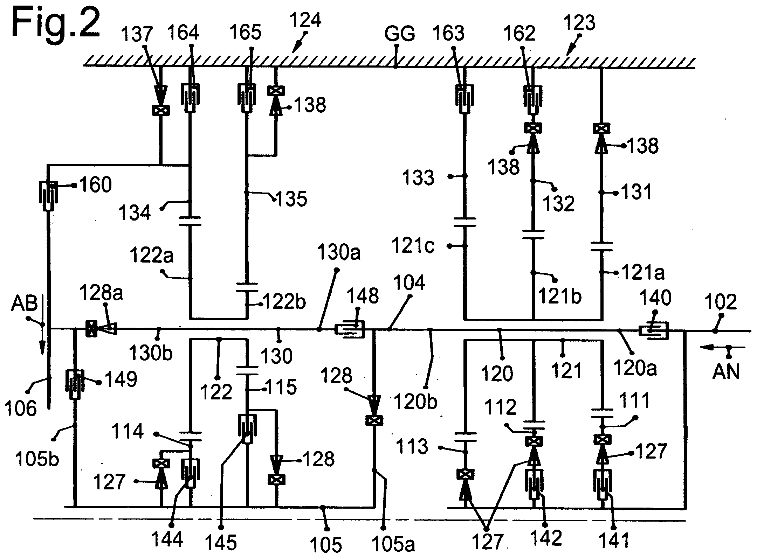

Das Mehrgangplanetengetriebe enthält gemäß Fig.2 grundsätzlich die gleichen Bauteile und die gleiche Bauanordnung wie das Ausführungsbeispiel eins, jedoch mit unterschiedlicher Nummerierung und folgenden Unterschieden: Das Getriebe besitzt analog zur Ausführung eins ein Basisgetriebe 123 und Erweiterungsgetriebe 124. Es besitzt eine Antriebswelle 102, zwei Zwischenwellen 104, 105, eine Abtriebswelle 106. Zwischen dem Sonnenrad 111 und dessen Schaltkupplung 141 ist eine Freilaufkupplung 127 montiert. Zwischen dem Sonnenrad 112 und dessen Schaltkupplung 142 ist eine Freilaufkupplung 127 montiert. Das Sonnenrad 113 ist durch eine Freilaufkupplung 127 mit der Welle 102 dauerhaft verbunden. Die Schaltkupplungen 140, 141, 142 sind ebenfalls mit der Antriebswelle 102 verbunden. Zwischen dem Hohlrad 131 und dem Getriebegehäuse GG wird eine Freilaufkupplung 138 montiert. Zwischen dem Hohlrad 132 und dessen Schaltkupplung 162 ist eine Freilaufkupplung 138 montiert. Das andere Ende der Schaltkupplung 162 ist mit dem Getriebegehäuse GG verbunden. Die Schaltkupplung 163 ist zwischen dem Hohlrad 133 und dem Getriebegehäuse GG montiert.Das Planetenträgerende 120b des Planetenträgers 120 ist mit der Welle 104 fest verbunden.

Bei diesem Ausführungsbeispiel zwei wird das Basisgetriebe 123 nur als Untersetzergetriebe geschaltet, daher ist die Anordnung und die Anzahl der Schaltkupplungen und der Freilaufkupplungen unterschiedlich mit dem des ersten Ausführungsbeispiels. Das Schaltschema ist für die 77 Vorwärtsgänge in den Tabelle 5a, 5b und der 29 Rückwärtsgänge in der Tabelle 5c beschrieben. Die Übersetzungen der 75 Gangstufen sind in der Tabelle 3 dargestellt, wobei der erste Gang der 77 Gangstufen beim Tabelleneintrag 24. Gangstufe beginnt und der 75. Gang der 77 Gangstufen beim Tabelleneintrag 98 endet. Die Übersetzungen der 76. Gangstufe beträgt 0,212 und der 77. Gangstufe beträgt. 0,121. Die Übersetzungen der 29 Rückwärtsgänge sind in der Tabelle 4 dargestellt, wobei der erste Gang der 29 Rückwänsgänge beim Tabelleneintrag 15. Gangstufe beginnt und der 27. Rückwärtsgang beim Tabelleneintrag 41 endet. Die Übersetzungen des 28. Rückwärtsgang beträgt 2,518 und des 29. Rückwärtsgang beträgt 0,985.

Der Gangwechsel des Getriebes findet unter Last und ohne Kraftflussunterbrechung statt. Der maximale Gangsprung beträgt 19 Gangstufen, d.h. das Getriebe ist nicht sequentiell und kann maximal 19 Gänge überspringen. Beim Gangwechsel des Getriebes wird die Schaltsteuerung so angeordnet, dass zuerst die Schaltkupplungen des Zielgangs geschaltet werden und danach die Schaltkupplungen des Startgangs ausgeschaltet werden, sodass keine Kraftflussunterbrechung stattfindet. Die Freilaufkupplungen verhindern eine Getriebespannung. Einzig beim Richtungswechsel des Getriebes wird eine Kraftflussunterbrechung stattfinden, um das Getriebe zu schützen.

### Drittes Ausführungsbeispiel für motorisierte Fahrzeuge

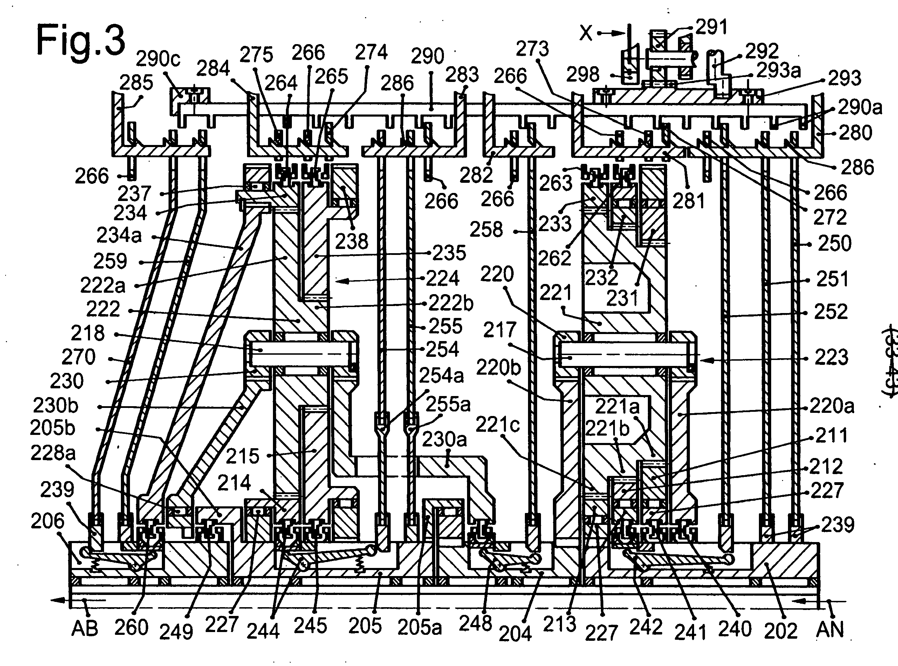

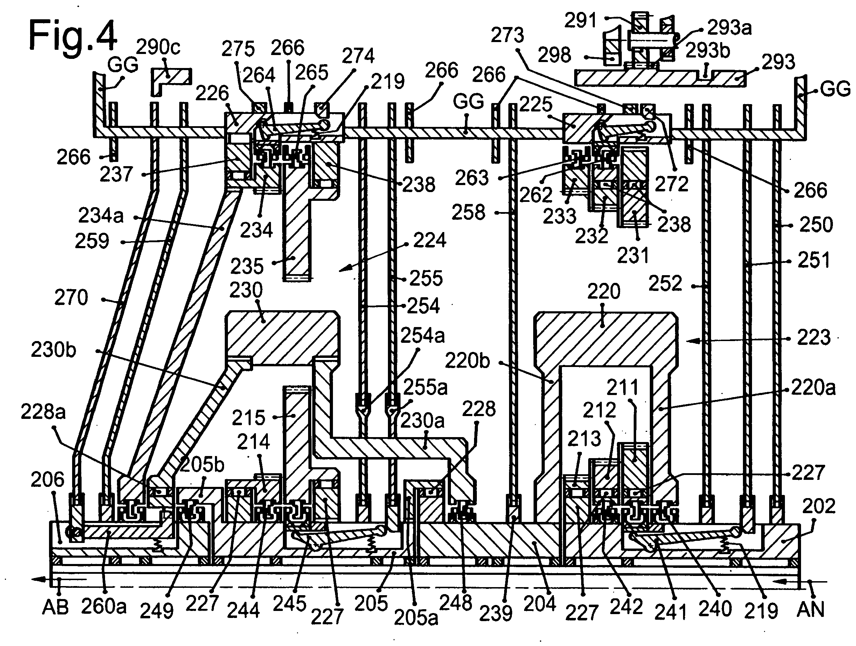

Das Mehrgangplanetengetriebe enthält gemäß Fig.3, Fig.4, Fig.10 eine Antriebswelle 202, zwei Zwischenwellen 204,205, eine Abtriebswelle 206. Das Getriebe besitzt analog zur Ausführung eins ein Basisgetriebe 223 und Erweiterungsgetriebe 224. Die Schalteinrichtung des Getriebes besitzt mehrere rotierende Schaltkupplungen 240, 241, 242, 244, 245, 248, 249, 260 und nicht rotierende Schaltkupplungen 262 bis 265; Kupplungssteuerscheiben 250, 251, 252, 254, 255, 258, 259, 270 und 272 bis 275; mehrere Ausschaltscheiben 266; mehrere Freilaufkupplungen 227, 228, 237, 238. Die Betriebsrichtung bzw. Sperrrichtung der Freilaufkupplung 227 und 237 in Bezug auf den Innenring ist identisch mit der Antriebsdrehrichtung des Getriebes. Die Betriebsrichtung der Freilaufkupplung 228 und 238 in Bezug auf den Innenring ist entgegengesetzt mit der Antriebsrichtung des Getriebes. Die Freilaufkupplungen 227 und 228 sind rotierende Freilaufkupplungen und die Freilaufkupplungen 237 und 238 sind nicht rotierende Freilaufkupplungen. Die Schalteinrichtung des Getriebes besitzt zwei, um 180 Grad gegenüber liegende, Schaltstangen 290, die an der Innenfläche der Ringe 290c und 293 befestigt sind, parallel zur Getriebeachse 201 verlaufen und fast genauso lang sind wie das Getriebe. Die Schaltstange 290 aus dem Bereich des Basisgetriebes 223 ist an der Innenfläche des Rings 293 befestigt. Die Schaltstangen 290 sind mit den Ringen 293, 290c drehbar und axial beweglich gelagert. Die Außenfläche des Rings 293 hat Gangwahlzähne 293a und einen Radialnut 293b für eine Exzenterwelle 292. An dem Getriebegehäuse GG ist ein Gangwahlzahnrad 291 und die Exzenterwelle 292 um die eigene Achse drehbar gelagert, wobei die Achse des Gangwahlzahnrads 291 parallel und die Achse der Exzenterwelle 292 senkrecht zur Getriebeachse 201 verläuft. Mehrere Exzenterwellen können angeordnet werden um eine bessere Schaltung bzw. axiale Schiebung der Schaltstange 290 zu ermöglichen oder es kann eine andere Aufbauart der Exzenterwelle 292 gewählt werden. An dem Getriebegehäuse ist das Führungszahnpaar 298 angeordnet. Die Zähne vom Gangwahlzahnrad 291 sind mit den Gangwahlzähnen 293a des Rings 293 im ständigen Eingriff. Die Kupplungssteuerscheiben 250, 251, 252, 257, 258, 259 besitzen an der Innenfläche drehbare Schaltmuffen 239 und steuern über diese Schaltmuffe 239 die dazugehörigen Schaltkupplungen. Die Schaltmuffen 239 drehen sich mit der zugehörigen Welle mit. Die Kupplungssteuerscheiben 254, 255 sind durch die Verbindungsscheiben 254a, 255a mit jeweils einer Schaltmuffe 239 verbunden. Die drei Bauteile, eine Schaltmuffe 239, eine Verbindungsscheiben 254a, 255a und eine Kupplungssteuerscheibe 254, 255, sind der Reihenfolge nach von innen nach außen koaxial ineinander angeordnet, sodass sie sich gemeinsam axial, parallel zur Getriebeachse 201, bewegen. Die Schaltmuffe 239 dreht sich mit der Welle 5 mit, die Verbindungsscheiben 254a, 255a drehen sich mit dem Planetenträger 230 mit und alle Kupplungssteuerscheiben sind auf dem Gehäusekörper und dem Segmenten 225 und 226 axial beweglich, nicht drehbar angeordnet. Die Verbindungsscheiben 254a, 255a der Kupplungssteuerscheiben 254, 255 befinden sich in den axialen Ausschnitten des Planetenträgers 230a. An dem Getriebegehäuse GG sind Segmente 225 für das Basisgetriebe 223 und Segmente 226 für das Erweiterungsgetriebe 224 angeordnet. Auf den Segmenten 225 sind die Kupplungssteuerscheiben 272, 273 und eine Ausschaltscheibe 266 axial beweglich, nicht drehbar angebracht. Auf den Segmenten 226 sind die Kupplungssteuerscheiben 274,275 und eine Ausschaltscheibe 266 axial beweglich, nicht drehbar angebracht. Die Kupplungssteuerscheiben 272, 273, 274, 275 besitzen an der Innenfläche zwei gegenüberliegende, um 180 Grad versetzte Schaltfüße 289 und steuern mit diesen Schaltfüßen 289 die zugehörigen Schaltkupplungen 262 bis 265. Einzelne Feder, die nicht abgebildet sind, drücken permanent die Kupplungssteuerscheiben in Richtung der Antriebswelle 202 bzw. nach rechts gemäß Fig.3 und Fig.4. Die Schaltstange 290 besitzt für jede Kupplungssteuerscheibe jeweils einen Schiebezapfen 290a. Jede Kupplungssteuerscheibe besitzt radiale Vorsprünge 288 an der Außenfläche, wobei die Anordnung dieser Vorsprünge 288 von den entsprechenden Gängen abhängig ist. Auf der Außenfläche der Antriebswelle 202, den Zwischenwellen 204, 205 und der Abtriebswelle 206 sind axiale Längsnuten für die Schaltkupplungen ausgebildet. Schaltkupplung 240 wird zwischen dem Planetenträgerende 220a und der Antriebswelle 202 montiert wird von der Kupplungssteuerscheibe 250 gesteuert. Zwischen dem Sonnenrad 211 und dessen Schaltkupplung 241 ist eine Freilaufkupplung 227 montiert die Schaltkupplung 241 wird von der Kupplungssteuerscheibe 251 gesteuert. Zwischen dem Sonnenrad 212 und dessen Schaltkupplung 242 ist eine Freilaufkupplung 227 montiert die Schaltkupplung 242 wird von der Kupplungssteuerscheibe 252 gesteuert. Das Sonnenrad 213 ist durch eine Freilaufkupplung 227 mit der Antriebswelle 202 verbunden. Schaltkupplung 248 zwischen der Welle 204 und dem Planetenträgerende 230a des Planetenträgers montiert von der Kupplungssteuerscheibe 258 gesteuert. Schaltkupplungen 244, 245 zwischen den Sonnenrädern 214, 215 und der Welle 205 montiert werden von den Kupplungssteuerscheiben 254, 255 gesteuert. Zwischen dem Sonnenrad 214 und der Welle 205 ist eine Freilaufkupplung 227 parallel zur Schaltkupplung 244 montiert. Zwischen dem Sonnenrad 215 und der Welle 205 ist eine Freilaufkupplung 228 montiert. Schaltkupplung 249 wird zwischen der Welle 205 und der Abtriebswelle 206 montiert und wird von der Kupplungssteuerscheibe 259 gesteuert. Die Schaltkupplung 260 wird zwischen der Abtriebswelle 206 und dem Hohlrad 234 montiert und von der Kupplungssteuerscheibe 270 gesteuert. Zwischen dem Planetenträgerende 230b und der Abtriebswelle 206 ist eine ausschaltbare Freilaufkupplung 228a montiert. Die Verbindung zwischen dem Innenring der Freilaufkupplung 228a und der Abtriebswelle 206 wird durch einen Schiebekeil 260a hergestellt. Die Verbindung zwischen dem Planetenträgerende 230b und der Abtriebswelle 206 wird in den Rückwärtsgängen durch den Keil 260a gemäß Fig.4 unterbrochen, indem der Keil 260a aus dem Innenring der Freilaufkupplung 228a herausgezogen wird und die Freilaufkupplung 228a wirkungslos wird. Die Kupplungssteuerscheibe 270 ist bei den Vorwärtsgängen ausgeschaltet und wird demnach durch die Federn in Richtung der Antriebswelle 202 gedrückt, sodass der Keil 260a in den entsprechenden Nut der Freilaufkupplung 228a hinein gedrückt wird und die zugehörige Freilaufkupplung 228a. in Betrieb ist.

Sechssatz Sperrelementen 280 bis 285 sind an dem Getriebegehäuse GG gelagert, jedoch können sie sich zur Getriebeachse 201 hin und zurück bewegen, sie werden jedoch durch Federn, die hier nicht abgebildet sind, permanent nach außen gedrückt. Die Sperrelemente 280 bis 285 besitzen eine "L"-förmige Gestalt, wobei das Ende eines Sperrelements, das parallel zur Getriebeachse 201 verläuft, jeweils einen Sperrzahn 286 für die entsprechende Kupplungssteuerscheibe besitzt. Die Sperrzähne 286 besitzen eine schräge Rückenfläche, die in der Fig.3 nach rechts geneigt ist. Die Seitenflächen des Sperrzahns 286 sind jeweils zu den Sperrelementen 280 bis 285 senkrecht. Das Ende des Sperrelements 280 bis 285, das parallel zur Getriebeachse 201 orientiert ist, verläuft durch eine Ausschnitt auf den entsprechenden Kupplungssteuerscheiben. Zur Ausschaltung der Kupplungssteuerscheiben befindet sich jeweils eine zusätzliche Ausschaltscheibe 266 an den Sperrelementen 280 bis 285. Die Ausschaltscheiben 266 haben die entgegengesetzte Anordnung von Vorsprüngen, wie die dazugehörigen Kupplungssteuerscheiben. Dadurch ist an einem Sperrelement wenn keine Kupplungssteuerscheibe geschaltet ist, ist die Ausschaltscheibe 266 geschaltet.

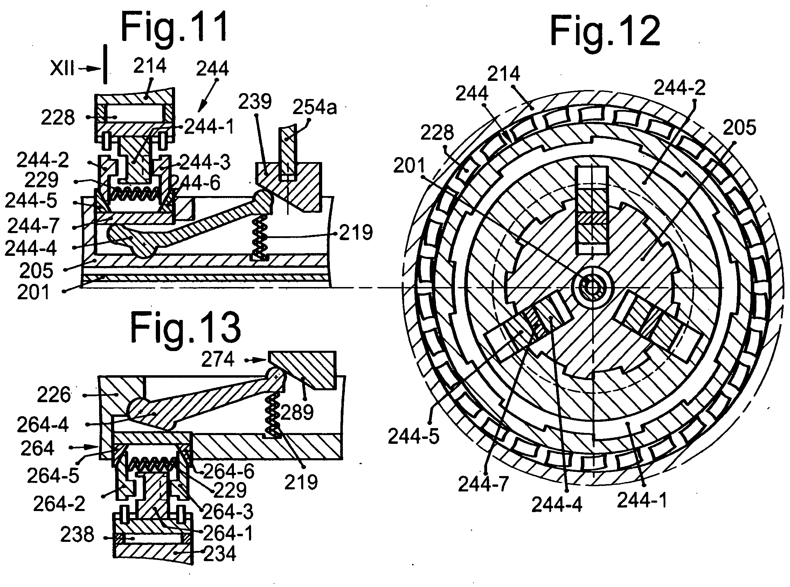

In der Fig.11, 12, 13 sind beispielhaft die Schaltkupplungen 244, 264 abgebilde Im Folgenden werden alle Schaltkupplungen am Beispiel von 244, 264 erläutert. Die Schaltkupplung 244 besteht aus einem Kupplungskörper 244-1, der an dem Innenring der Freilaufkupplung 228 verdrehfest und begrenzt axial beweglich montiert ist. Der Kupplungskörper 244-1 besitzt an beiden Seitenflächen Kupplungszähne, wobei diese Kupplungszähne der einen Seitenfläche zu anderen Seitenfläche eine halbzahnbreite versetzt sind. An beiden Seiten des Kupplungskörpers 244-1 befinden sich jeweils die Kupplungsscheiben 244-2 bzw. 244-3. Die Kupplungsscheibe 244-2 bzw. 244-3 besitzt Kupplungszähne, die für die linke bzw. rechte Seite des Kupplungskörpers 244-1 vorgesehen sind. Die Kupplungszähne der Kupplungsscheiben 244-2, 244-3 sind zueinander symmetrisch angeordnet, wobei die Kupplungsscheiben 244-2, 244-3 an der Welle 205 verdrehfest und begrenzt axial beweglich angeordnet sind. Ein Keilkörper 244-5 bzw. 244-6 befindet sich jeweils hinter der Kupplungsscheibe 244-2 bzw. 244-3. Die Federn 229 drücken die Kupplungsscheiben 244-2 und 244-3 auseinander. Die Keilkörper 244-5, 244-6 befinden sich auf der Rechteckscheibe 244-7. Der Schalthebel 244-4 befindet sich mit seinem Lastarm unterhalb der Rechteckscheibe 244-7 und mit dem Kraftarm unterhalb der Schaltmuffe 239 innerhalb der dazugehörigen Welle 205. Die Feder 219 drückt den Kraftarm des Schalthebels 244-4 aus der Welle hinaus. Die Funktion der Schaltkupplung wird erläutert. Durch die axiale Bewegung der entsprechenden Schaltmuffe 239 der Schaltkupplung 244 wird der Kraftarm des Schalthebels 244-4 zur Welle 205 entgegen der Feder 219 gedrückt, sodass der Lastarm des Schalthebels 244-4 die Rechteckscheibe 244-7 von der Welle 205 hinweg bewegt. Durch die Bewegung der Rechteckscheibe 244-7 werden sich die Kupplungsscheiben 244-2 bzw. 244-3, bedingt durch die Keilkörper 244-5, 244-6, entgegen der Feder 229, zueinander bewegen, bis sich eine der Kupplungsscheiben 244-2, 244-3 mit dem entsprechenden Kupplungszähnen des Kupplungskörpers 244-1 in Eingriff gelangen. Durch die versetzte Anordnung der Kupplungszähne des Kupplungskörpers 244-1 ist nur eine der Kupplungsscheiben 244-2, 244-3 in Eingriff, sodass die Kupplungsscheibe, die nicht in Eingriff ist, den Kupplungskörper 244-1 entgegen der anderen Kupplungsscheibe hält und sich der Eingriff der Zähne nicht löst. Die Schaltkupplung ist dadurch gekoppelt. Durch die axiale Bewegung der Schaltmuffe 239 in entgegengesetzte Richtung, rechts gemäß Fig.11, wird der Kraftarm des Schalthebels 244-4 durch die Feder 219, durch die Feder 229 und gegebenenfalls durch die Antriebskraft zwischen der Welle 205 und dem Sonnenrad 214 aus der Welle hinweg bewegt. Währenddessen bewegen sich die Rechteckscheibe 244-7 und die Keilkörper 244-5, 244-6 zur Richtung der Wellenachse, sodass sich die Kupplungsscheiben 244-2, 244-3 voneinander hinweg bewegen, bis die Kupplungszähne nicht mehr in Eingriff sind. Die Schaltkupplung ist dadurch entkoppelt. Die Bauteile und das Schaltprinzip der Schaltkupplung 264 ist gleich, wie die der Schaltkupplung 244, wobei jedoch die Bauteile, die an oder in der Welle 205 angeordnet sind, bei der Schaltkupplung 264 an oder in dem Segment 226 angeordnet sind. Zusätzlich ist der Kupplungskörper 264-1 der Schaltkupplung 264 an dem Außenring der Freilaufkupplung 238 des Hohlrads 234 angeordnet. Die restlichen Schaltkupplungen sind entweder vom Typ rotierende Schaltkupplung 244 oder vom Typ nicht rotierende Schaltkupplung 264 mit den entsprechenden Nummerierungen für die Bauteile.

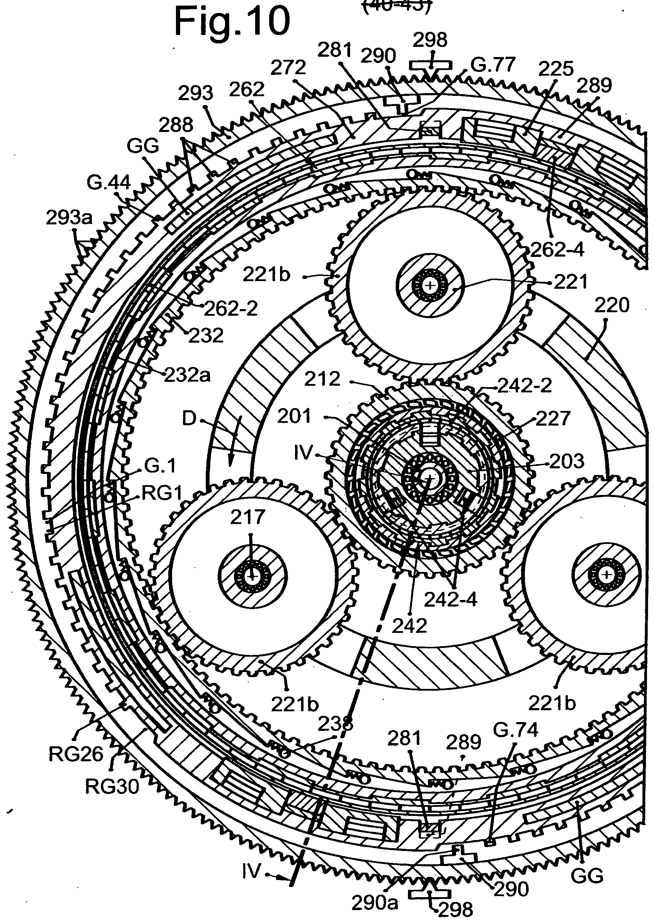

Im Folgenden wird der Schaltvorgang des Getriebes erläutert. Der Gangwechsel bzw. Schaltvorgang ist in zwei Abläufen aufgeteilt. Im ersten Ablauf wird durch das externe Drehen des Gangvorwahlzahnrads 291 der Zielgang gewählt. Dadurch dreht sich der Ring 293 und die Schaltstange 290. Der Drehwinkel bzw. die Position der Schaltstange 290 wird einem eindeutigen Gang zugeordnet. Demzufolge positioniert sich die Schaltstange 290 mit dem entsprechenden Drehwinkel des Zielgangs. Das Getriebe befindet sich nach wie vor im Startgang bzw. im vorherigen Gang. Im zweiten Ablauf führt die Exzenterwelle 292 eine komplette Drehung um seine eigene Achse durch, wobei diese Drehung extern betätigt wird. Durch diese Drehung der Exzenterwelle 292 bewegt sich der Ring 293 und die Schaltstange 290 axial in die Richtung der Abtriebswelle 206, also links gemäß Fig.3, 4, und wieder zurück in die Richtung der Antriebswelle 202, also rechts gemäß Fig.3, 4. Die Führungszähne 298 verhindern das Verdrehen der Schaltstange 290 während seiner axialen Bewegung. Dabei sind die Führungszähne 298 mit den Gangvorwahlzähnen 293a nur während der axialen Bewegung der Schaltstange 290 in Eingriff. Der Schaltvorgang ist beendet. Während sich die Schaltstange 290 in Richtung der Abtriebswelle 206 axial bewegt, bewegen die Schiebezapfen 290a der Schaltstange 290 die entsprechenden Kupplungssteuerscheiben des Zielgangs in Richtung der Abtriebswelle 206, weil die Kupplungssteuerscheiben des Zielgangs Vorsprünge 288 an den entsprechenden Positionen besitzen. Die Schaltmuffen 239 bzw. die Schaltfüße 289 der Kupplungssteuerscheiben 250, 251, 252, 254, 255, 258, 259, 270 und 272 bis 275 schieben den Kupplungshebelarm in Richtung der Getriebeachse 201, sodass sich die entsprechende Schaltkupplung des Zielgangs einschaltet. Die Bewegung der Kupplungssteuerscheiben 250, 251, 252, 254, 255, 258, 259, 270 und 272 bis 275 bewirkt die Bewegung des dazugehörigen Sperrelements in Richtung der Getriebeachse 201, weil die schräge Rückenfläche des Sperrzahns 286 von den entsprechenden Kupplungssteuerscheiben in Richtung der Getriebeachse 201, entgegen der Federkraft gedrückt wird. Die radiale Bewegung des Sperrelements zur Getriebeachse 201 entsperrt die Kupplungssteuerscheibe des Startgangs wegen den Sperrzähnen 286 des Sperrelements. Die Federn, die hier nicht abgebildet sind, schieben die entsperrten Kupplungssteuerscheiben des Startgangs in Richtung der Antriebswelle 202. Durch die Bewegung der entsperrten Kupplungssteuerscheiben des Startgangs werden die dazugehörigen Schaltkupplungen ausgeschaltet, weil die entsperrten Kupplungssteuerscheiben des Startgangs die Schaltmuffen 239 bzw. Schaltfüße 289 vom Kupplungshebelarm wegschieben, sodass der Kupplungshebelarm durch die dazugehörige Feder von der Getriebeachse 201 weggedrückt wird und sich die Schaltkupplung ausschaltet. Das entsprechende Sperrelement bewegt sich durch die Federkraft radial weg von der Getriebeachse 201, weil die Kupplungssteuerscheiben die Sperrzähne nicht blockieren. Die Kupplungssteuerscheiben des Zielgangs werden dadurch gesperrt. Gemäß Fig. 3 sind die Kupplungssteuerscheiben 252, 258, 272, 274, und die Ausschaltscheibe 266 des Sperrelement 285 eingeschaltet bzw. gesperrt, weil sie sich an der linken Seite des zugehörige Sperrzahns 286 befinden, das entspricht gemäß Tabelle 5b dem 47. Vorwärtsgang. Während der radialen Bewegung des Sperrelements zur Getriebeachse 201 ist der Startgang geschaltet und der Zielgang wird dabei hinzu geschaltet, sodass das Getriebe kurzzeitig zwei Gänge gleichzeitig geschaltet hat, wobei durch die Freilaufkupplungen 227, 228, 237, 238 die langsame Welle bzw. der langsame Zahnrad von der schnellen Welle bzw. dem schnellen Zahnrad überholt wird, damit es keine Getriebespannung gibt. Der Schaltzeitpunkt der Kupplungen wird unter anderem durch die relativen Abstände von den Sperrzähnen 286 zu den dazugehörigen Kupplungssteuerscheiben reguliert. Bei den Rückwärtsgängen wird das Hohlrad 235 durch die dazugehörige Schaltkupplung 265 in Antriebsdrehrichtung gesperrt und das Hohlrad 234 wird durch die Schaltkupplung 260 mit der Abtriebswelle 206 verbunden. In der Fig. 10 sind die Vorsprüngen 288 auf den Kupplungssteuerscheiben 272 beispielhaft abgebildet, zum Beispiel wird beim 44. Vorwärtsgang G44 die Kupplung 262 über die Kupplungssteuerscheibe 272 geschaltet, weil diese Kupplungssteuerscheibe 272 einen Vorsprung 288 besitzt. Wenn eine Kupplungssteuerscheibe eine Kupplung nicht schalten soll, besitzt sie an der entsprechenden Position keinen Vorsprung, sondern einen Ausschnitt bzw. eine Vertiefung. Die Positionen der Vorsprünge können aus der Tabelle 5 abgeleitet werden, denn die Abkürzung S in der Tabelle impliziert eine geschaltete Kupplung, sodass die entsprechende Kupplungssteuerscheibe einen Vorsprung besitzen muss. Die Nummerierung des Ausführungsbeispiels drei ist analog zur Nummerierung des Ausführungsbeispiels zwei, jedoch muss die erste Ziffer 1 durch die Ziffer 2 ersetzt werden. Somit ist das Schaltschema in der Tabelle 5a bis 5d des zweiten Ausführungsbeispiels ebenfalls gültig für das dritte Ausführungsbeispiel.

### Viertes Ausführungsbeispiel für motorisierte Fahrzeuge

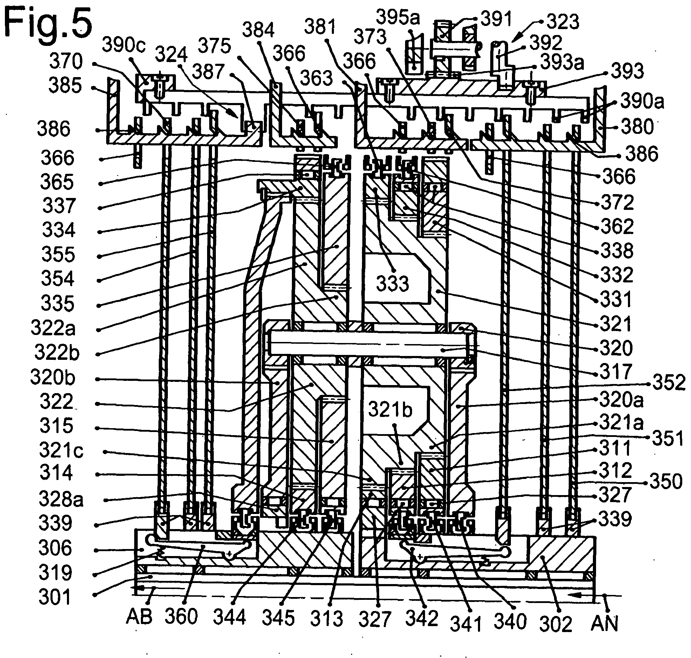

Das lastschaltbare Mehrgangplanetengetriebe enthält gemäß Fig.5 grundsätzlich die gleichen Bauteile, das gleiche Schaltprinzip wie beim Ausführungsbeispiel drei, jedoch mit unterschiedlicher Nummerierung, wobei die erste Ziffer 2 durch eine 3 ersetzt wird. und mit folgenden Unterschieden: Das Basisgetriebe 323 und das Erweiterungsgetriebe 324 sind auf einem gemeinsamen Planetenträger 320 montiert, sodass das Basisgetriebe 323 als Untersetzergetriebe und das Erweiterungsgetriebe 324 als Übersetzergetriebe hintereinander geschaltet sind. Dadurch werden 44 Vorwärtsgänge und 10 Rückwärtsgänge erzielt, wobei weniger Schaltelemente, Schaltkupplungen, Bauteile benötigt werden. Die Schaltkupplung 364, die sich zwischen dem Hohlrad 334 und dem Getriebegehäuse GG befindet, die Freilaufkupplung 338, die sich zwischen dem Hohlrad 335 und dem Getriebegehäuse GG befindet, die Zwischenwellen 304, 305 mit ihren Schaltkupplungen 346 und ihren Freilaufkupplungen 328, 327, der Planetenträger 330, die Verbindungsscheiben 354a, 355a, die Kupplungssteuerscheiben 356, 354, 355, die Sperrelemente 382, 383 entfallen in diesem Ausführungsbeispiel vier. Das Getriebe ist in allen Gangstufen nicht sequentiell und kann beliebig geschaltet werden, ausgenommen bei einem Richtungswechsel des Getriebes. Das Schaltschema der 44 Vorwärtsgänge ist in der Tabelle 6 dargestellt. Die Schaltung der Schaltkupplung 360 bewirkt die Ausschaltung der Freilaufkupplung 328a, die sich zwischen dem Planetenträger 320 und der Abtriebswelle 306 befindet, damit das Getriebe beim Rückwärtsgang nicht blockiert wird. Die Übersetzungen der ersten 42 Gangstufen sind in der Tabelle 3 dargestellt, wobei der erste Gang der 42 Gangstufen beim Tabelleneintrag 57. Gangstufe beginnt und der letzte Gang der 42 Gangstufen beim Tabelleneintrag 98 endet. Die Übersetzung der 43. Gangstufe bzw. 44. Gangstufe beträgt 0,218 bzw. 0,121. Das Schaltschema der Rückwärtsgänge 1 bis 9 ist in der Tabelle 6 dargestellt, wobei die ersten 9 Vorwärtsgänge den ersten 9 Rückwärtsgängen entsprechen, jedoch ist das Hohlrad 335 gesperrt und das Hohlrad 334 ist mit der Abtriebswelle 306 verbunden. Beim Rückwärtsgang der Gangstufe 10 ist das Hohlrad 335 gesperrt, das Hohlrad 334 ist mit der Abtriebswelle 306 verbunden und die Schaltkupplung 340 ist geschaltet. Die Übersetzung der 10 Rückwärtsgänge werden der Reihenfolge nach aufgezählt, erste Übersetzung 5,183; 4,808; 4,518; 4,229; 3,939; 3,715; 3,491; 3,268; 3,094; letzte Übersetzung 0,985.

### Fünftest Ausführungsbeispiel für motorisierte Fahrzeuge

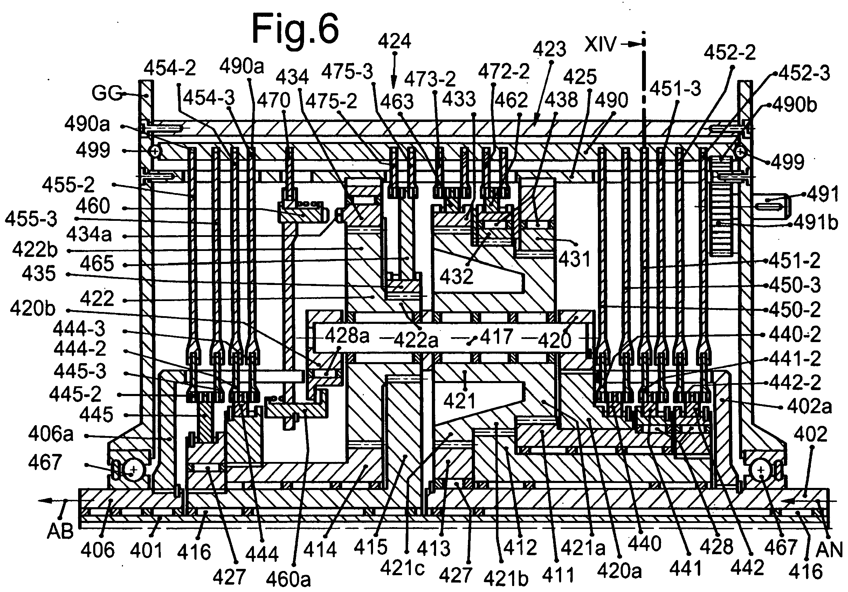

In dieser Ausführung wird das lastschaltbare Mehrgangplanetengetriebe für ein motorisiertes Fahrzeug mit sequentieller Schaltung vorgeschlagen gemäß Fig. 6. Das lastschaltbare Mehrgangplanetengetriebe enthält eine Antriebswelle 402, die mit eine Wellenhülse 402a fest verbunden ist, eine Abtriebswelle 406 die mit eine Wellenhülse 406a fest verbunden ist, eine Schalteinrichtung, ein Basisgetriebe 423 und Erweiterungsgetriebe 424 mit gemeinsamen Planetenträger 420, für die Realisierung von 44 Vorwärtsgangstufen und 10 Rückwärtsgangstufen.

Die Schalteinrichtung des Getriebes besitzt eine Schalthülse 490. Die Schalthülse 490 ist zwischen den Seitenwänden des Getriebegehäuses GG durch zwei Walzlager 499 drehbar, jedoch nicht axial beweglich gelagert. An der Innenfläche der Schalthülse 490 sind für jede Kupplungssteuerscheibe jeweils eine radialer Führungsnut 490a angeordnet. Der Führungsnut 490a hat einen bestimmten Bahnverlauf, sodass die entsprechenden Kupplungssteuerscheiben bei den dazugehörigen Gangstufen axial bewegt werden. Um die Schalthülse 490 drehen zu können, sind innerhalb der Schalthülse 490 rechts gemäß Fig.6 Schaltzähne 490b angeordnet. Die Schaltzähne 490b sind mit dem Schaltzahnrad 491b im stetigen Eingriff. Die Welle 491 des Schaltzahnrads 491b wird durch eine Bohrung am Seitenteil des Getriebegehäuses GG nach außen geführt und ist durch das Getriebegehäuse GG drehbar gelagert. Dieses außen befindliche Ende der Welle 491 bewirkt durch externes Drehen die Schaltung des Getriebes. Die Segmente 425 befinden sich koaxial innerhalb der Schalthülse 490 und sind an das Getriebegehäuse GG befestigt, wobei mindestens zwei gegenüberliegende Segmente einen Längsausschnitte 425a besitzen. Die Längsausschnitte 425a der Segmente verlaufen parallel zur Getriebeachse 401. Jede Kupplungssteuerscheibe besitzt zwei gegenüberliegende Arme. Die Schaltung des Getriebes besitzt die Kupplungssteuerscheiben 450-2, 450-3 451-2, 451-3, 452-2, 452-3, 455-2, 455-3, 470, 472-2, 472-3, 473-2, 473-3, 475-2, 475-3. Alle Kupplungssteuerscheiben des Getriebes sind mit deren Armen in den Längsausschnitte der Segmente drehfest und axial beweglich gelagert, wobei das Ende der Arme aus dem Längsausschnitt herausragt und sich zusätzlich im Führungsnut 490a der Schalthülse 490 befindet. Dadurch werden die Kupplungssteuerscheiben durch die Schalthülse 490 gesteuert. Die Sonnenräder 411, 412, 413 und das Planetenträgerende 420a besitzen jeweils eine Verlängerungsnabe, die nach rechts gemäß Fig.6 orientiert sind und koaxial zueinander angeordnet sind, wobei zwischen diesen Verlängerungsnaben Nadellager 416 platziert sind. Die Verlängerungsnabe vom Sonnenrad 413 ist durch eine Freilaufkupplung 427 mit der Antriebswelle 402 verbunden. Die Verlängerungsnaben von den Sonnenrädern 411, 412 sind jeweils über eine Freilaufkupplung 428 mit den dazugehörigen Schaltkupplungskörpern 441-1, 442-1 der Schaltkupplungen 441, 442 verbunden. Die Kupplungskörper 440-1 der Schaltkupplung 440 ist ohne Freilaufkupplung mit der Verlängerungsnabe 420a des Planetenträgers 420 direkt verbunden. Drei Kupplungssteuerscheiben 450-2,450-3 bzw. 451-2, 451-3 bzw. 452-2, 452-3 steuern Kupplungsscheiben 440-2, 440-3 bzw. 441-2, 441-3 bzw. 442-2, 442-3 die auf der Wellenhülse 402a der Antriebswelle 402 nebeneinander axial beweglich montiert sind und werden von der Antriebswelle 402 stetig mitgenommen, sodass die Schaltkupplung 440 den Planetenträger 420 über den Planetenträgerende 420a bzw. die Schaltkupplung 441 den Sonnenrad 411 bzw. die Schaltkupplung 442 den Sonnenrad 412 im geschalteten Zustand mitnimmt Die Sonnenräder 414, 415 besitzen jeweils eine Verlängerungsnabe, die nach links gemäß Fig. 6 orientiert sind. Die Sonnenräder 414, 415 und der Planetenträger 420 drehen die Abtriebswelle 406 durch die Schaltkupplung 444, 445 bzw. durch die Freilaufkupplung 428a mit. Die Schaltung enthält für die Steuerung der Sonnenräder 414 bzw. 415 die Kupplungssteuerscheibenpaare 454-2, 454-3 bzw. 455-2,455-3 mit den dazugehörigen Kupplungsscheibenpaare 444-2,444-3 bzw. 454-2,454-3 und die Kupplungskörpern 444-1 bzw. 445-1. Die Kupplungsscheibenpaare 444-2, 444-3 bzw. 445-2,445-3 sind auf der Wellenhülse 406a der Abtriebswelle 406 befindliche Längsausschnitte nebeneinander nur axial beweglich montiert.

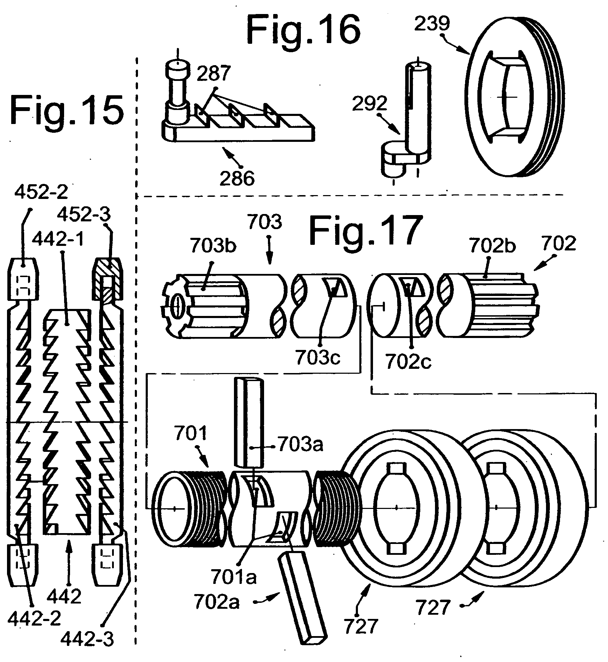

Die Schaltung enthält für die Sperrung der Hohlräder 432 bzw. 433 die Schaltkupplungen 462 bzw. 463 mit den dazugehörigen Kupplungssteuerscheiben 472-2, 472-3 bzw. 473-2, 473-3. Die Schaltung enthält für die Sperrung des Hohlrads 435 die Schaltkupplung 465 mit den dazugehörigen Kupplungssteuerscheiben 475-2, 475-3. Die Kupplungssteuerscheibenpaare 472-2/3, 473-2/3, 475-2/3 der Hohlräder besitzen an der inneren Seitenfläche Kupplungszähne. Alle genannten Schaltkupplungen bzw. Bremsen sind als Sägezahnkupplungen ausgeführt gemäß Fig. 15. Die Schaltkupplung 460 verbindet bei den Rückwärtsgängen das Hohlrad 434 mit der Abtriebswelle 406 und ist als Sägezahnkupplung ausgeführt, wobei die zugehörigen Sägezähne 434a auf der Seitenfläche des Hohlrads 434 angebracht sind und werden durch eine Kupplungssteuerscheibe 470 gesteuert. Eine weitere Kupplungsscheibe 460a ist durch Sägezähne mit dem Innenring der Freilaufkupplung 428a, die sich zwischen dem Planetenträgerende 420b und der Abtriebswelle 406 befindet, verbunden. Die Schaltkupplung 460 und die Kupplungsscheibe 460a sind an der rechten Seite der Wellenhülse 406a axial beweglich montiert und sie sind mit der Wellenhülse 406a gemeinsam drehbar. Die linke Seite der Abtriebswelle 406 führt aus dem Getriebe hinaus und ist die Ausgangswelle des Getriebes. Die Hohlräder 431, 434 sind jeweils mit dem Segmente 425 durch die Freilaufkupplung 438, 437 verbunden. Das Planetenträgerende 420b ist durch eine ausschaltbare Freilaufkupplung 428a mit der Abtriebswelle 406 verbunden. Zwischen der Schaltkupplung 445 und der Verlängerungsnabe des Sonnenrads 415 ist eine Freilaufkupplung 427 angeordnet. Die Kupplungsscheiben 440-2, 440-3, 441-2, 441-3, 442-2, 442-3, 444-2, 444-3, 445-2, 445-3 befinden sich jeweils der Reihe nach in den Kupplungssteuerscheiben 450-2, 450-3, 451-2, 451-3, 452-2, 452-3, 454-2, 454-3, 455-2, 455-3 und sind koaxial angeordnet, sodass sich eine Kupplungsscheibe und eine Kupplungssteuerscheibe gemeinsam axial bewegen können, aber sich nur die Kupplungsscheibe drehen kann, jedoch nicht die Kupplungssteuerscheibe. Die Kupplungssteuerscheiben 472-2/3, 473-2/3, 475-2/3 der Hohlräder 432, 433, 435 besitzen an der Innenfläche Kupplungszähne für die zugehörigen Kupplungskörper 462-i, 463-1, 465-1 der Kupplungen 462, 463, 465.

Die Kupplungszähne an der Seitenfläche der Kupplungskörper sind zueinander versetzt angeordnet und die Zähne der Kupplungsscheibenpaare sind zueinander symmetrisch angeordnet, sodass nur eines der Kupplungsscheibe mit dem Kupplungskörper in Eingriff gelangen kann und die übrige Kupplungsscheibe den Kupplungskörper fest hält bzw. entgegen der anderen Kupplungsscheibe drückt. Die axiale Beweglichkeit der Kupplungskörper ermöglicht die Kopplung des Kupplungskörpers mit einer der Kupplungsscheiben.

Im Folgenden wird die Schaltung des Getriebes erläutert: Das Basisgetriebe 423 arbeitet als Untersetzungsgetriebe und das Erweiterungsgetriebe 424 arbeitet als Übersetzungsgetriebe, dadurch werden die Sonnenräder 411, 412, 413 des Basisgetriebes angetrieben und die Sonnenräder 414, 415 des Erweiterungsgetriebes abgetrieben. Eines der Hohlräder 431, 432, 433 des Basisgetriebes ist in entgegengesetzte Drehrichtung der Antriebswelle gesperrt und eines der Hohlräder 434, 435 des Erweiterungsgetriebes 424 ist in Drehrichtung der Antriebswelle gesperrt. In den Gangstufen 1 bis 9 wird das Basisgetriebe 423 direkt mit der Abtriebswelle 406 verbunden und arbeitet somit alleine, in den restlichen Gangstufen 10 bis 44 ist das Erweiterungsgetriebe 424 zusätzlich in Reihe geschaltet.

Zum Wechseln einer Gangstufe wird zuerst die Schaltwelle 491 gedreht, dadurch dreht sich das Schaltzahnrad 491b und somit auch die Schalthülse 490 um einen bestimmten Winkel, der einem bestimmten Gang entspricht. Während der Drehung der Schalthülse 490 werden die zugehörigen Kupplungssteuerscheiben des Gangs durch den Führungsnut-Bahnverlauf paarweise axial zueinander bewegt, falls die entsprechende Kupplung eingeschaltet werden soll, oder werden paarweise axial voneinander hinweg bewegt, falls die entsprechende Kupplung ausgeschaltet werden soll, oder werden nicht axial bewegt, falls die entsprechende Kupplung ihren Zustand behalten soll. Bei der Bewegung der Kupplungssteuerscheiben zueinander werden die Kupplungsscheiben ebenfalls zueinander bewegt, sodass eine Kupplungsscheibe mit dem entsprechenden Kupplungskörper in Eingriff gelangt und die übrige Kupplungsscheibe den Kupplungskörper fest hält. Dadurch ist die entsprechende Kupplung eingeschaltet. Bei der Bewegung der Kupplungssteuerscheiben voneinander hinweg werden die Kupplungsscheiben ebenfalls voneinander hinweg bewegt, sodass der Kupplungskörper von der Kupplungsscheibe getrennt wird. Dadurch ist die entsprechende Kupplung ausgeschaltet. Durch den Führungsnut-Bahnverlauf 490a der Schalthülse 490 werden die entsprechenden Kupplungen des Zielgangs hinzu geschaltet, während die Kupplungen des Startgangs noch geschaltet sind. Die Freilaufkupplungen 427, 428, 437,438 der entsprechenden Schaltkupplungen des Zielgangs oder Startgangs vermeiden eine Getriebespannung, da die langsamere Komponente überholt wird. Danach werden durch den Führungsnut-Bahnverlauf die Schaltkupplungen des Startgangs, die nicht im Zielgang notwendig sind, ausgeschaltet. Das Getriebe befindet sich jetzt im Zielgang. Im ganzen Schaltvorgang befindet sich das Getriebe permanent in einer Gangstufe, außer bei einem Richtungswechsel des Getriebes. Zum Schalten in den Rückwärtsgang muss sich das Getriebe in der ersten Gangstufe befinden. Das Drehen der Schalthülse 490 bewirkt zuerst die Trennung der Freilaufkupplung 428a von der Kupplungsscheibe 460a, somit das Wellenhülse 406a der Abtriebswelle 406 von der Freilaufkupplung 428a. Danach verbindet die Schaltkupplung 460 das Hohlrad 434 mit der Abtriebswelle 406 bzw. Wellenhülse 406a und die Schaltkupplung 465 sperrt das Hohlrad 435. Das Getriebe befindet sich im ersten Rückwärtsgang. Das Schaltschema und die Übersetzungen sind mit dem Ausführungsbeispiel 4 identisch, nur muss in der Tabelle 6 die erste Ziffer 4 durch die 3 ersetzt werden.

### Sechstes Ausführungsbeispiel für die Hinterradnabe eines Fahrrads

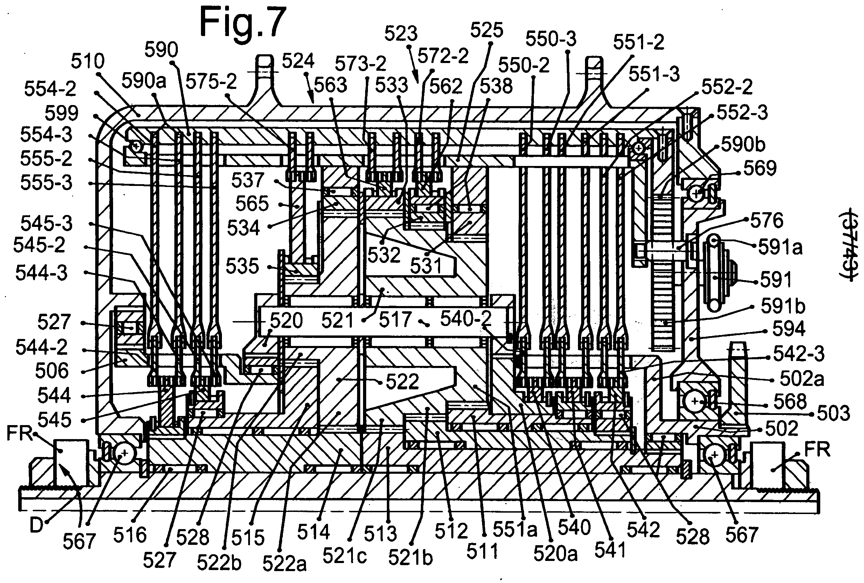

In dieser Ausführung wird das lastschaltbare Mehrgangplanetengetriebe in einer Hinterradnabe eines Fahrrads vorgeschlagen. Das lastschaltbare Mehrgangplanetengetriebe enthält eine Nabenhülse 510. Die Enden der Nabenhülse 510 sind durch die Walzlager 567, 569 drehbar gelagert. Das Walzlager 567 stützt sich auf der Nabenachse 501 links gemäß Fig.7 und das Walzlager 569 stützt sich auf dem Seitenteil 594 der Nabenhülse 510 rechts gemäß Fig.7. Zwischen der Innenfläche des Seitenteils 594 und der Außenfläche der Antriebswelle 502 ist das Walzlager 568 montiert. Ein weiterer Walzlager 567 befindet sich zwischen der Nabenachse 501 und der Antriebswelle 502. In der Nabenhülse 510 sind eine Antriebswelle 502, eine Abtriebswelle 506, eine Schalteinrichtung, ein Basisgetriebe 523 und Erweiterungsgetriebe 524 mit gemeinsamen Planetenträger 520 angeordnet für die Realisierung von 44 Gangstufen.

Die Schalteinrichtung des Getriebes besitzt eine Schalthülse 590. Die Schalthülse 590 ist durch zwei Walzlagern 599 auf der Außenfläche der Segmente 525 drehbar, jedoch nicht axial beweglich gelagert. An der Innenfläche der Schalthülse 590 sind für jedes Schaltelement jeweils ein radialer Führungsnut 590a angeordnet. Die Schaltzähne 590b befinden sich innerhalb der Schalthülse 590 am rechten Ende und sind mit dem Schaltzahnrad 591b im stetigen Eingriff. Die Welle 591 des Schaltzahnrads 591b wird durch eine Bohrung am Seitenteil 594 nach außen geführt. Dieses außen befindliche Ende der Welle 591 besitzt eine Scheibe mit einem Drehseil 591a, wobei das Drehseil 591a zum Radlenker geführt wird und für die Betätigung der Nabenschaltung benötigt wird. Die Schaltung des Getriebes besitzt die Kupplungssteuerscheibenpaare, Schaltkupplungen und die Anordnung der Sonnenräder mit deren Verlängerungsnaben wie im Ausführungsbeispiel 5 für motorisierte Fahrzeuge, jedoch ohne Rückwärtsgänge. Die Segmente 525 sind durch Befestigungselemente 576 mit dem Seitenteil 594 der Nabenhülse 510 befestigt gemäß Fig. 7 rechts, wobei das Seitenteil 594 mit dem Fahrradrahmen fest verbunden ist.

Im Folgenden wird die Schaltung des Getriebes erläutert: Das Basisgetriebe 523 arbeitet als Untersetzungsgetriebe und das Erweiterungsgetriebe 524 arbeitet als Übersetzungsgetriebe, dadurch werden die Sonnenräder 511, 512, 513 des Basisgetriebes angetrieben und die Sonnenräder 514, 515 des Erweiterungsgetriebes abgetrieben. In den Gangstufen 1 bis 9 wird das Basisgetriebe 523 direkt mit der Abtriebswelle 506 verbunden und arbeitet somit alleine, in den restlichen Gangstufen 10 bis 44 ist das Erweiterungsgetriebe 524 zusätzlich in Reihe geschaltet. Zum Wechseln einer Gangstufe wird die Schaltzahnrad 591b durch das Drehseil 591a gedreht, womit das Schalthülse 590 gedreht werden kann. Im ganzen Schaltvorgang befindet sich das Getriebe permanent in einer Gangstufe. Das Schaltschema der Schaltkupplungen und die Übersetzungen sind identisch mit der Ausführungsbeispiel 6.

### Siebtes Ausführungsbeispiel des Getriebes im Tretlagerbereich des Fahrrads

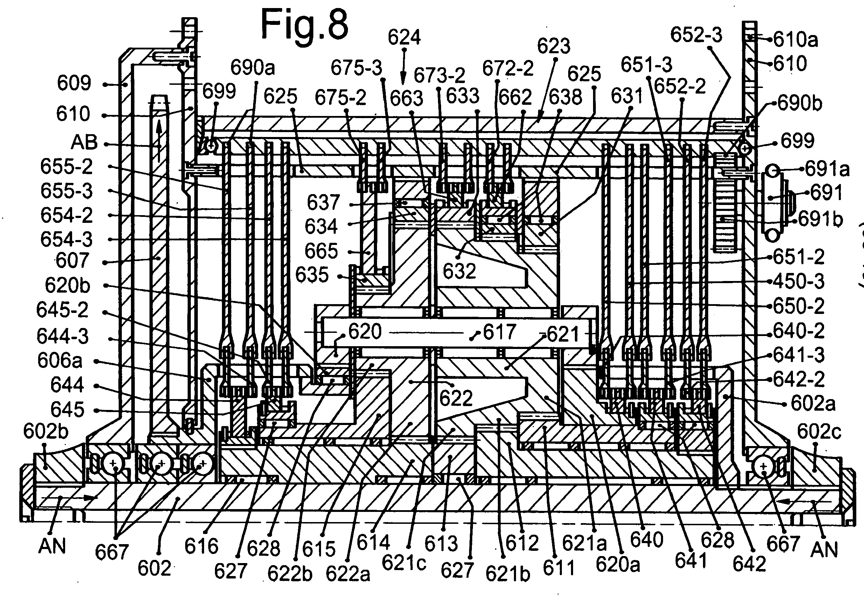

Bei dieser Ausführung wird das Mehrgangplanetengetriebe im Tretlagerbereich des Fahrrads vorgeschlagen gemäß Fig. 8. Grundsätzlich enthält das Getriebe die Bauteile, Schalteinrichtungen, Übersetzungen des Ausführungsbeispiels 6 für die Fahrrad-Hinterradnabe, jedoch werden einige Unterscheide im Folgenden erläutert. Die Nabenhülse 610 ist am Fahrradrahmen im Tretlagerbereich befestigt. Die Kurbelradwelle des Fahrrads ist gleichzeitig die Antriebswelle 602 des Getriebes. Das Kettenrad 607 wird an die Abtriebswelle 606 montiert. Eine Kette überträgt die Kraft zwischen der Abtriebswelle 606 zum Antriebsrad des Fahrrads. Das Sonnenrad 613 besitzt keine Verlängerungsnabe und ist über die Freilaufkupplung 627 mit der Antriebswelle 602 verbunden. Der Getriebekörper ist durch die Segmente 625 mit der Nabenhülse 610 verbunden. Die Schalthülse 690 ist zwischen den Seitenteilen der Nabenhülse 610 durch die Walzlager 699 drehbar gelagert. Das Schaltschema der Schaltkupplungen in den Gangstufen 1 bis 44 ist in der Tabelle 6 ersichtlich, wobei die erste Ziffer 3 durch 6 ersetzt werden muss. Die Übersetzungen der ersten 42 Gangstufen sind in der Tabelle 3 dargestellt, wobei der erste Gang der 42 Gangstufen beim Tabelleneintrag 57. Gangstufe beginnt und der letzte Gang der 42 Gangstufen beim Tabelleneintrag 98 endet. Die Übersetzung der 43. Gangstufe bzw. 44. Gangstufe beträgt 0,218 bzw. 0,121

### Achtes Ausführungsbeispiel für ein Trethebel-Fahrrad

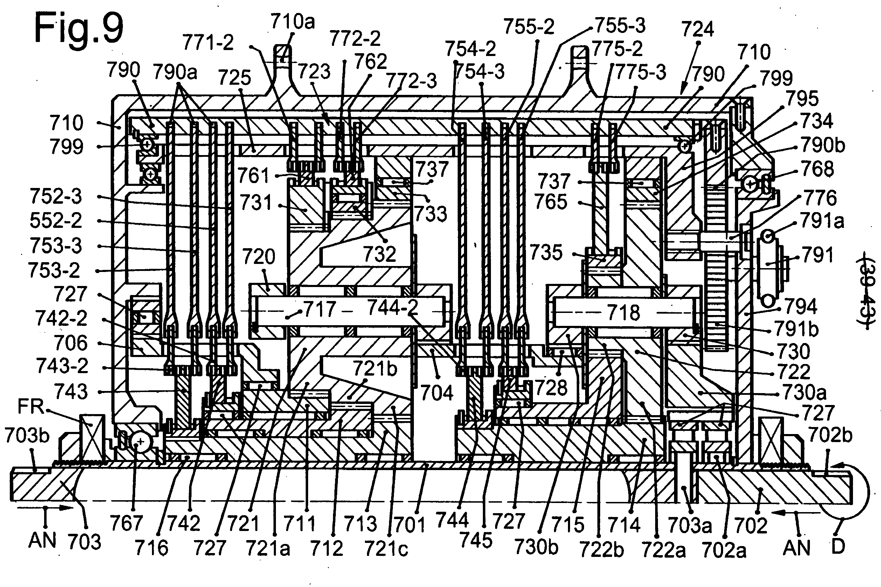

In dieser Ausführung wird das lastschaltbare Mehrgangplanetengetriebe für eine Fahrrad ohne Antriebskette, jedoch mit Trethebeln vorgeschlagen. Das Mehrganggetriebe enthält grundsätzlich analog zum Ausführungsbeispiel 6 die gleichen Sägezahnschaltkupplungen, jedoch unterscheidet es sich im Folgenden, wobei die erste Ziffer der Nummerierung des Ausführungsbeispiels 6 durch die Ziffer 7 ersetzt werden muss: Das Mehrganggetriebe enthält gemäß Fig.9 eine Nabenhülse 710. Die Enden der Nabenhülse 710 sind durch die Walzlager 767, 768 drehbar gelagert. Das Walzlager 767 stützt sich auf der Nabenachse 701 links gemäß Fig.9 und das Walzlager 768 stützt sich auf dem Seitenteil 794 der Nabenhülse 710 rechts gemäß Fig.9. Das Seitenteil.794 ist an der Nabenachse 701 und zusätzlich an der hier nicht näher abgebildete Fahrradrahmen FR befestigt. In der Nabenhülse 710 befinden sich zwei Antriebswellen 702, 703, eine Zwischenwelle 704, eine Abtriebswelle 706, eine Schalteinrichtung, das Basisgetriebe 723, das Erweiterungsgetriebe 724, um 42 Gangstufen zu realisieren. Die Schalteinrichtung des Getriebes besitzt eine Schalthülse 790, die durch die zwei Walzlager 799 auf dem Getriebeträgersegment 725 drehbar, axial nicht beweglich gelagert sind. Die Schaltfunktion und der Schaltvorgang des Getriebes ist grundsätzlich analog zum sechsten Ausführungsbeispiel, jedoch mit Folgenden Unterschieden. Das Basis- und Erweiterungsgetriebe sind als Übersetzergetriebe hintereinander geschaltet und besitzt jeweils ein Planetenträger 720 für das Basisgetriebe und 730 für das Erweiterungsgetriebe. Die Sonnenräder 714, 715 bzw. der Planetenträger 730 des Erweiterungsgetriebes 724 sind mit der Zwischenwelle 704 durch die Schaltkupplungen 744, 745 bzw. Freilaufkupplung 728 verbunden, wobei das andere Ende der Zwischenwelle 704 mit dem Planetenträger 720 des Basisgetriebes verbunden ist. Die Sonnenräder 711 bzw. 712 bzw. 713 des Basisgetriebes sind durch die Freilaufkupplung 728 bzw. die Schaltkupplung 742 bzw. die Schaltkupplung 743 mit der Abtriebswelle 706 verbunden. Der Kupplungskörper 744-1 der Schaltkupplung 744 ist auf der Verlängerungsnabe des Sonnenrads 714 montiert. Der Kupplungskörper 745-1 der Schaltkupplung 745 ist auf dem Außenring der Freilaufkupplung 727 montiert, wobei der Innenring der Freilaufkupplung 727 auf der Verlängerungsnabe des Sonnenrads 715 montiert ist. Somit treibt entweder eines der Sonnenräder 714, 715 oder der Planetenträger 730 des Erweiterungsgetriebes 724 den Planetenträger 720 des Basisgetriebes an. Die Hohlräder 733, 734 sind jeweils mit dem Getriebekörpersegmente 725 durch eine Freilaufkupplung 737 verbunden und sind nur in die Antriebsdrehrichtung permanent gesperrt. Das Hohlrad 731 bzw. 735 ist mit der Schaltkupplung 761 bzw. 765 in die Antriebsdrehrichtung gesperrt. Zwischen dem Hohlrad 732 und dessen Schaltkupplung 772 ist eine Freilaufkupplung 727 montiert.

Das Trethebelrad besitzt Trethebel für den Antrieb, dafür ist an jede Seite der Nabenhülse 710 eine Antriebswelle 702 bzw. 703 in die Hohlachse 701 der Nabe 710 drehbar gelagert. Die Enden der Antriebswellen 702, 703 in der Hohlachse 701 sind jeweils mit dem Innenring der Freilaufkupplungen 727 verbunden, wobei der Außenring beider Freilaufkupplungen 727 mit dem Planetenträgerende 730a verbunden ist. Die anderen Enden 702b, 703b der Antriebswellen 702, 703 sind aus der Hohlachse 701 hinaus geführt, sodass es jeweils mit einem Trittbretthebel oder. ähnliches montiert werden kann, um die Antriebswellen 702, 703 anzutreiben.

Die Antriebswellen 702, 703 können jeweils keine komplette Umdrehung durchführen, sondern nur in einem bestimmten Winkelbereich sich drehen und sind unabhängig voneinander bedienbar. An der Hohlachse 701 sind Ausschnitte 701a für die Stifte 702a bzw. 703a vorhanden, wobei die Stifte 702a, 703a jeweils eine Verbindung bzw. eine Nut-Feder Verbindung zwischen der Antriebswelle 702, 703 und einer zugehörigen Freilaufkupplung 727 herstellt gemäß Fig.17. Alle Schaltkupplungen des Getriebes sind als Sägezahnkupplung 442 vorgesehen. Das Getriebe behält seine Funktion auch mit anderen Kupplungssorten. Der Gangwechsel erfolgt ohne Kraftflussunterbrechung und ist auch im Stand und unter Last möglich. Das Schaltschema ist in die Tabelle 7 ersichtlich.Die Übersetzungen der 42 Gangstufen sind in der Tabelle 3 dargestellt, wobei der erste Gang der 42 Gangstufen beim Tabelleneintrag 101. Gangstufe beginnt und der letzte Gang der 42 Gangstufen beim Tabelleneintrag 142 endet.

**Tabelle 1. Zähne-Zahl Verhältnisse der Zahnräder**

| Rädergruppe | Basisgetriebe | | | | | | | | | Erweiterungsgetriebe | | | | | |
|---|---|---|---|---|---|---|---|---|---|---|---|---|---|---|---|
| | Sonnenrad | | | Stufenplanet | | | Hohlrad | | | Sonnenrad | | Stufenplanet | | Hohlrad | |
| | 11 | 12 | 13 | 21a | 21b | 21c | 31 | 32 | 33 | 14 | 15 | 22a | 22b | 34 | 35 |
| 1 | 18 | 16 | 14 | 14 | 16 | 18 | 46 | 48 | 50 | 14 | 25 | 18 | 7 | 50 | 39 |
| 2 | 26 | 23 | 20 | 20 | 23 | 26 | 66 | 69 | 72 | 20 | 36 | 26 | 10 | 72 | 56 |
| 3 | 44 | 39 | 34 | 34 | 39 | 44 | 112 | 117 | 122 | 34 | 61 | 44 | 17 | 122 | 95 |
| 4 | 54 | 48 | 42 | 42 | 48 | 54 | 138 | 144 | 150 | 42 | 75 | 54 | 21 | 150 | 117 |
| 5 | 62 | 55 | 48 | 48 | 55 | 62 | 158 | 165 | 172 | 48 | 86 | 62 | 24 | 172 | 134 |
| 6 | 70 | 62 | 54 | 54 | 62 | 70 | 178 | 186 | 194 | 54 | 97 | 70 | 27 | 194 | 151 |
| 7 | 99 | 88 | 77 | 77 | 88 | 99 | 253 | 264 | 275 | 77 | 138 | 99 | 38 | 275 | 214 |

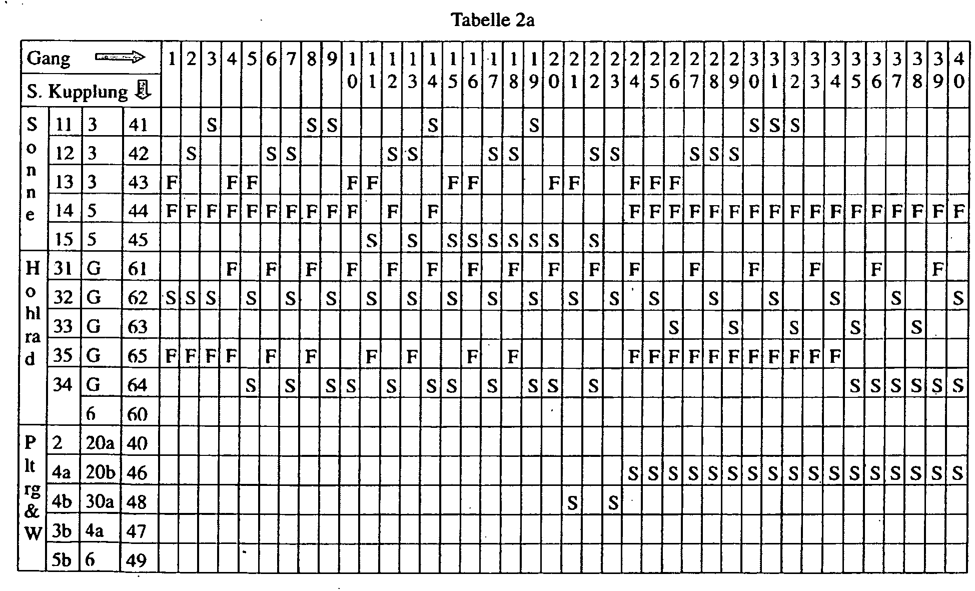

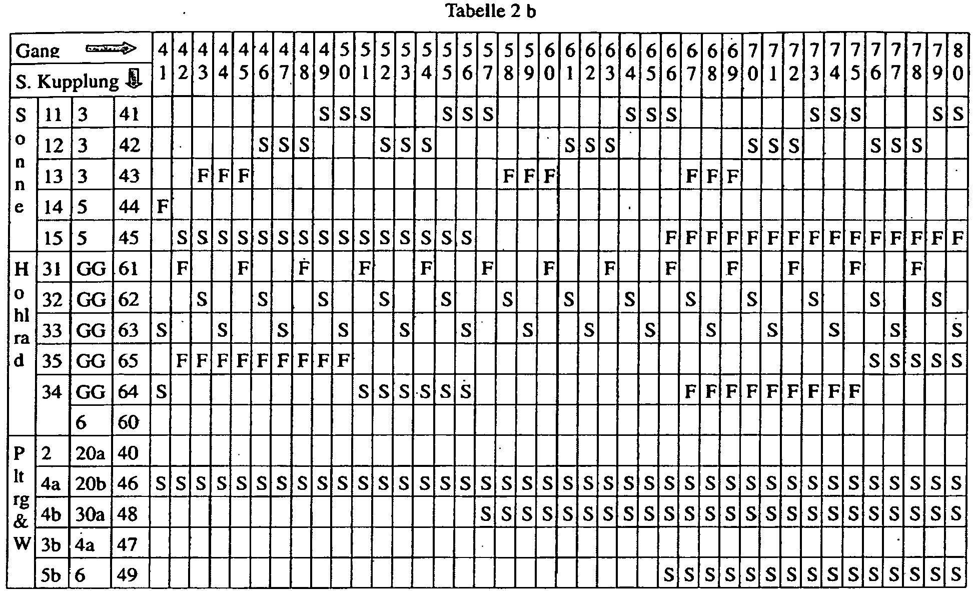

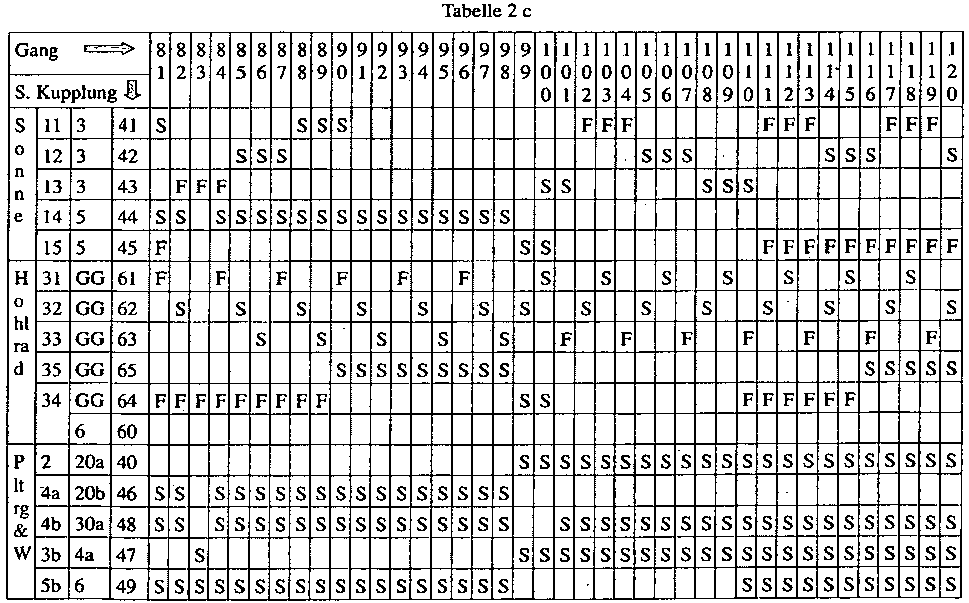

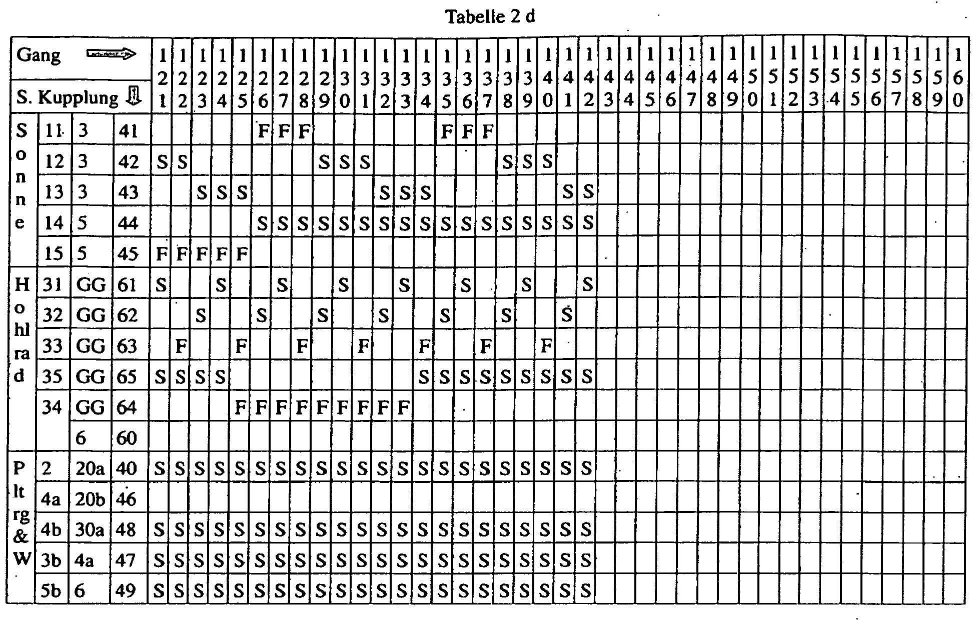

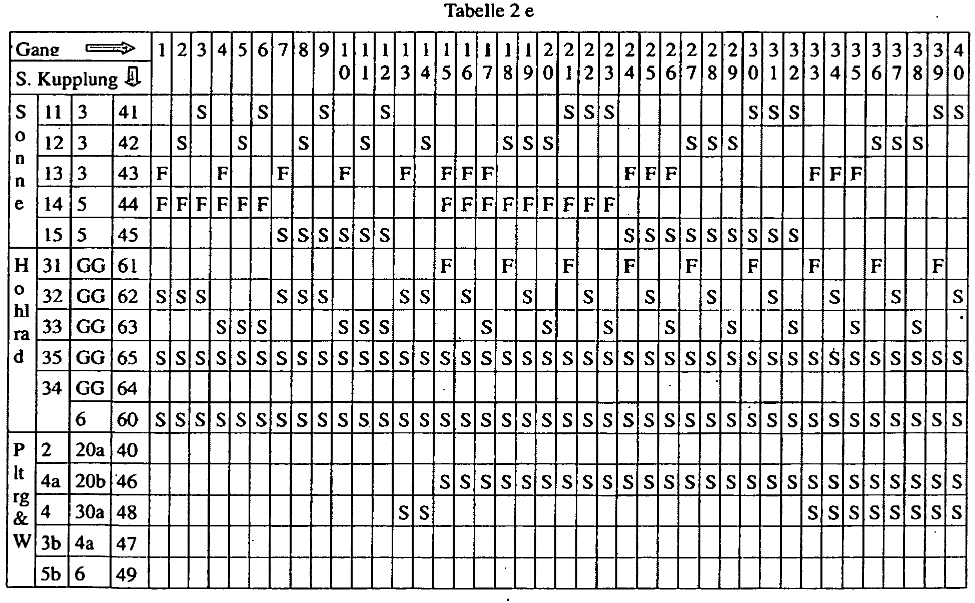

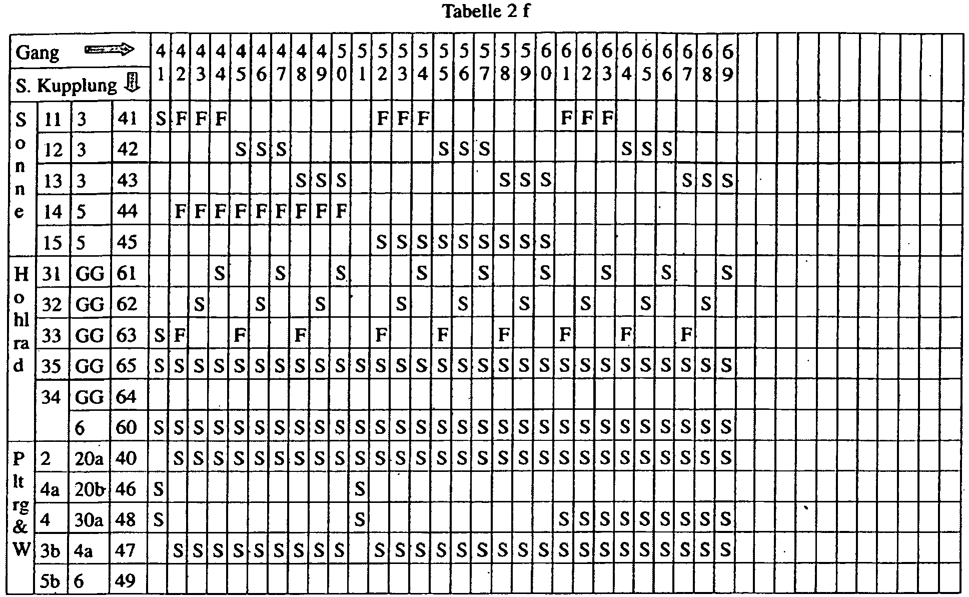

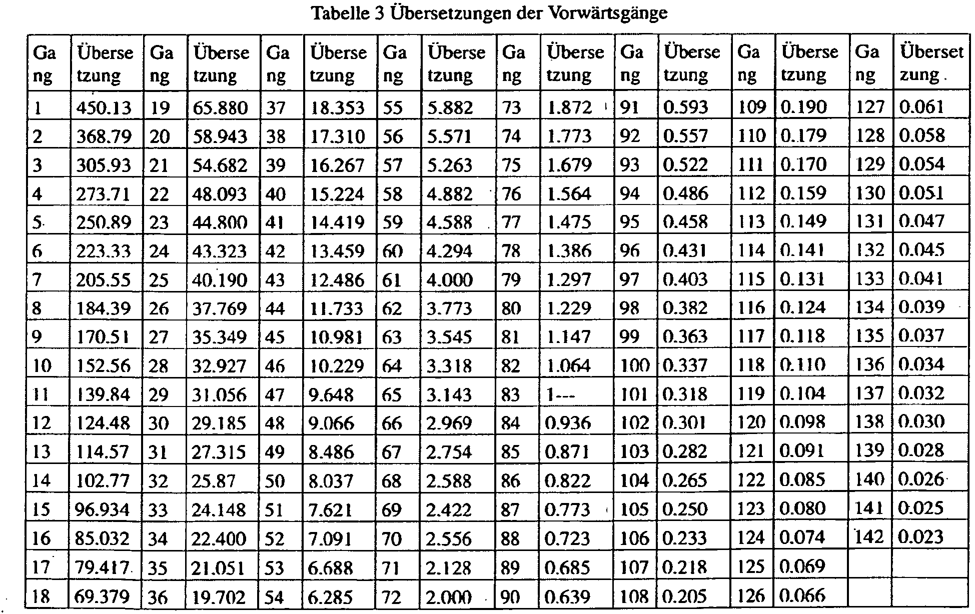

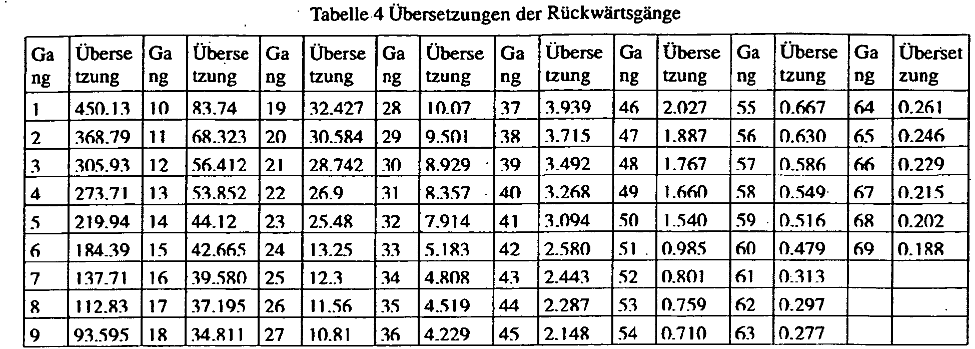

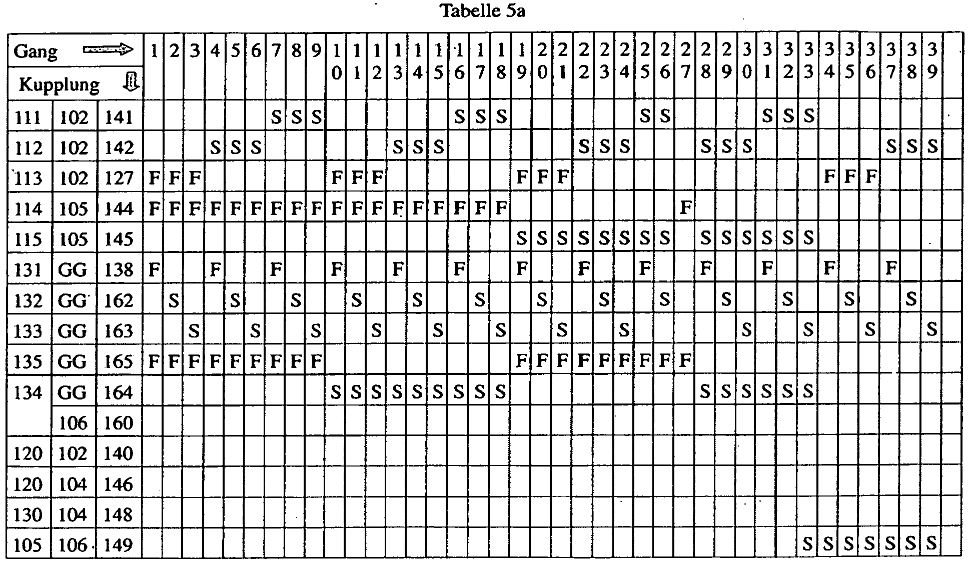

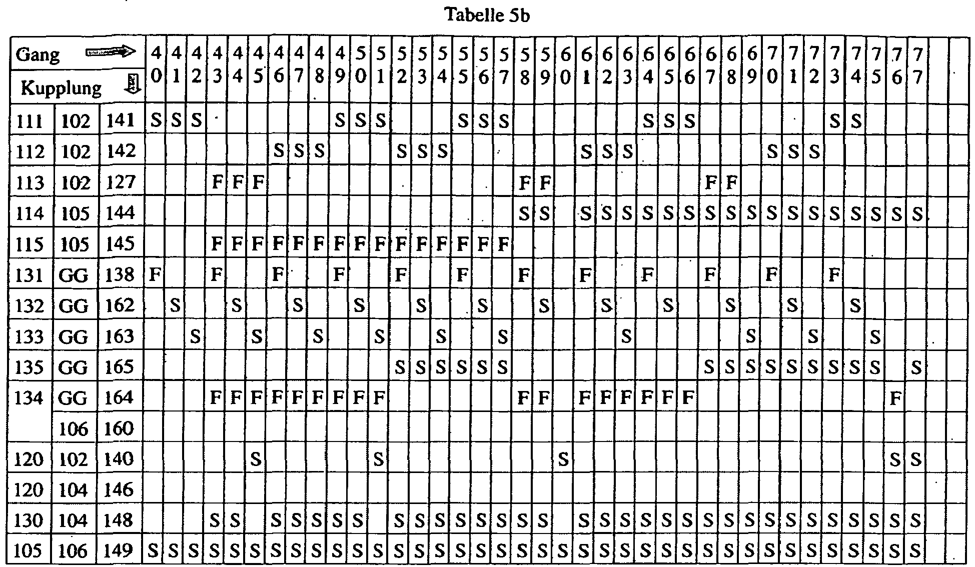

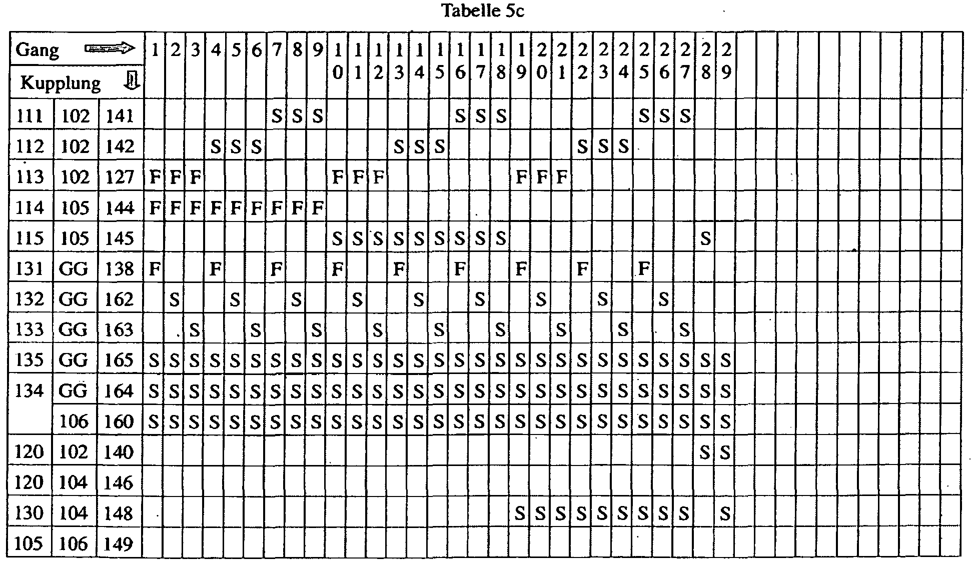

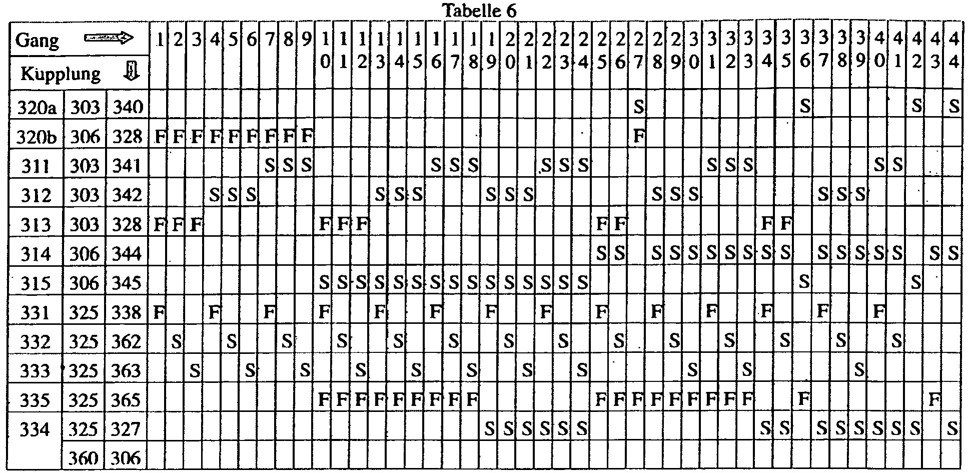

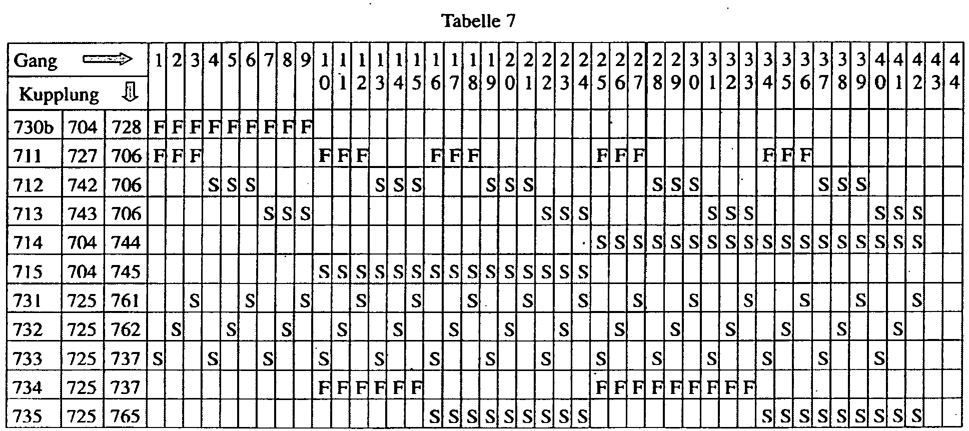

## Patentansprüche

1. Lastschaltbares Mehrgangplanetengetriebe
mit einer Antriebswelle (2-Fig.1), einer ersten, zweiten und dritten Zwischenwelle (3, 4, 5), einer Abtriebswelle (6), einem Basisgetriebe (23) und einem Erweiterungsgetriebe (24),
wobei das Basisgetriebe (23) ein erstes, zweites und drittes Sonnenrad (11, 12, 13), ein erstes, zweites und drittes Hohlrad (31, 32, 33) sowie einen ersten Planetenträger (20) aufweist, auf dem ein erstes, zweites und drittes Planetenrad (21 a, 21 b, 21 c) angeordnet sind,
wobei das erste, zweite und dritte Planetenrad (21a, 21b, 21c) fest miteinander verbunden sind oder aus einem Körper (21) bestehen,
wobei das Erweiterungsgetriebe (24) ein viertes und fünftes Sonnenrad (14, 15), ein viertes und fünftes Hohlrad (34, 35) sowie einen zweiten Planetenträger (30) aufweist, auf dem ein viertes und fünftes Planetenrad (22a, 22b) angeordnet sind,
wobei das vierte und fünfte Planetenrad (22a, 22b) fest miteinander verbunden sind oder aus einem Körper (22) bestehen,
wobei das erste Planetenrad (21 a) mit dem ersten Sonnenrad (11) und dem ersten Hohlrad (31) kämmt,
wobei das zweite Planetenrad (21 b) mit dem zweiten Sonnenrad (12) und dem zweiten Hohlrad (32) kämmt,
wobei das dritte Planetenrad (21c) mit dem zweiten Sonnenrad (13) und dem zweiten Hohlrad (33) kämmt,
wobei das vierte Planetenrad (22a) mit dem vierten Sonnenrad (14) und dem vierten Hohlrad (34) kämmt,
wobei das fünfte Planetenrad (22b) mit dem fünften Sonnenrad (15) und dem fünften Hohlrad (35) kämmt,
wobei das erste Hohlrad (31) mittels eines ersten Schaltelements (61, 38) mit dem Getriebegehäuse (GG) verbindbar ist;
wobei das zweite Hohlrad (32) mittels eines zweiten Schaltelements (62) mit dem Getriebegehäuse (GG) verbindbar ist;
wobei das dritte Hohlrad (33) mittels eines dritten Schaltelements (63, 37) mit dem Getriebegehäuse (GG) verbindbar ist;
wobei das vierte Hohlrad (34) mittels eines vierten Schaltelements (64, 37) mit dem Getriebegehäuse (GG) verbindbar ist;
wobei das fünfte Hohlrad (35) mittels eines fünften Schaltelements (65, 38) mit dem Getriebegehäuse (GG) verbindbar ist;
wobei die Antriebswelle (2) mittels eines sechsten Schaltelements (40) mit dem ersten Planetenträger (20) verbindbar ist;
wobei der erste Planetenträger (20) mittels eines siebten Schaltelements (46) mit der zweiten Zwischenwelle (4) verbindbar ist,
wobei die zweite Zwischenwelle (4) mittels eines achten Schaltelements (48) mit dem zweiten Planetenträger (30) verbindbar ist,
wobei der zweite Planetenträger (30) mittels eines neunten Schaltelements (28a) mit der Abtriebswelle (6) verbindbar ist,
wobei die Antriebswelle (2) mittels eines zehnten Schaltelements (28) mit der ersten Zwischenwelle (3) verbindbar ist,
wobei die erste Zwischenwelle (3) mittels eines elften Schaltelements (47) mit der zweiten Zwischenwelle (4) verbindbar ist,
wobei die zweite Zwischenwelle (4) mittels eines zwölften Schaltelements (28) mit der dritten Zwischenwelle (5) verbindbar ist,
wobei die dritte Zwischenwelle (5) mittels eines dreizehnten Schaltelements (49) mit der Abtriebswelle (6) verbindbar ist,
wobei die erste Zwischenwelle (3) mittels eines vierzehnten Schaltelements (41, 28) mit dem ersten Sonnenrad (11), mittels eines fünfzehnten Schaltelements (42) mit dem zweiten Sonnenrad (12) und mittels eines sechzehnten Schaltelements (43, 27) mit dem dritten Sonnenrad (13) verbindbar ist,
wobei die dritte Zwischenwelle (5) mittels eines siebzehnten Schaltelements (44, 27) mit dem vierten Sonnenrad (14) und mittels eines achtzehnten Schaltelements (45, 28) mit dem fünften Sonnenrad (15) verbindbar ist,
wobei das erste Hohlrad (31) mittels eines neunzehnten Schaltelements (28) mit der zweiten Zwischenwelle (4) verbindbar ist,
wobei das vierte Hohlrad (34) mittels eines zwanzigsten Schaltelements (60) mit der Abtriebswelle (6) verbindbar ist,
wobei das neunte Schaltelement (28a) eine ausschaltbare Freilaufkupplung (28a) ist,
wobei das zehnte, zwölfte und neunzehnte Schaltelement (28, 28, 28) jeweils eine Freilaufkupplung (28) sind,
wobei das erste (61, 38), dritte (63, 37), vierte (64-37), fünfte (65, 38), vierzehnte (41, 28), sechzehnte (43, 27), siebzehnte (44, 27) und achtzehnte (45, 28) Schaltelement jeweils aus einer Schaltkupplung und einer parallel dazu angeordneten Freilaufkupplung bestehen,
wobei alle anderen Schaltelemente jeweils Schaltkupplungen sind.

2. Lastschaltbares Mehrgangplanetengetriebe
mit einer Antriebswelle (102-Fig.2), einer ersten und zweiten Zwischenwelle (104, 105), einer Abtriebswelle (106), einem Basisgetriebe (123) und einem Erweiterungsgetriebe (124),
wobei das Basisgetriebe (123) ein erstes, zweites und drittes Sonnenrad (111, 112, 113), ein erstes, zweites und drittes Hohlrad (131, 132, 133) sowie einen ersten Planetenträger (120) aufweist, auf dem ein erstes, zweites und drittes Planetenrad (121 a, 121 b, 121 c) angeordnet sind,
wobei das erste, zweite und dritte Planetenrad (121 a, 121 b, 121 c) fest miteinander verbunden sind oder aus einem Körper (121) bestehen,
wobei das Erweiterungsgetriebe (124) ein viertes und fünftes Sonnenrad (114, 115), ein viertes und fünftes Hohlrad (134, 135) sowie einen zweiten Planetenträger (130) aufweist, auf dem ein viertes und fünftes Planetenrad (122a, 122b) angeordnet sind,
wobei das vierte und fünfte Planetenrad (122a, 122b) fest miteinander verbunden sind oder aus einem Körper (122) bestehen,
wobei das erste Planetenrad (121a) mit dem ersten Sonnenrad (111) und dem ersten Hohlrad (131) kämmt,
wobei das zweite Planetenrad (121b) mit dem zweiten Sonnenrad (112) und dem zweiten Hohlrad (132) kämmt,
wobei das dritte Planetenrad (121c) mit dem zweiten Sonnenrad (113) und dem zweiten Hohlrad (133) kämmt,
wobei das vierte Planetenrad (122a) mit dem vierten Sonnenrad (114) und dem vierten Hohlrad (134) kämmt,
wobei das fünfte Planetenrad (122b) mit dem fünften Sonnenrad (115) und dem fünften Hohlrad (135) kämmt,
wobei das erste Hohlrad (131) mittels eines ersten Schaltelements (138) mit dem Getriebegehäuse (GG) verbindbar ist;
wobei das zweite Hohlrad (132) mittels eines zweiten Schaltelements (162, 138) mit dem Getriebegehäuse (GG) verbindbar ist;
wobei das dritte Hohlrad (133) mittels eines dritten Schaltelements (163) mit dem Getriebegehäuse (GG) verbindbar ist;
wobei das vierte Hohlrad (134) mittels eines vierten Schaltelements (164, 137) mit dem Getriebegehäuse (GG) verbindbar ist;
wobei das fünfte Hohlrad (135) mittels eines fünften Schaltelements (165, 138) mit dem Getriebegehäuse (GG) verbindbar ist;
wobei die Antriebswelle (102) mittels eines sechsten Schaltelements (140) mit dem ersten Planetenträger (120) verbindbar ist;
wobei die erste Zwischenwelle (104) mittels eines siebten Schaltelements (148) mit dem zweiten Planetenträger (130) verbindbar ist,
wobei der zweite Planetenträger (130) mittels eines achten Schaltelements (128a) mit der Abtriebswelle (106) verbindbar ist,
wobei die erste Zwischenwelle (104) mittels eines neunten Schaltelements (128) mit der zweiten Zwischenwelle (105) verbindbar ist,
wobei die zweite Zwischenwelle (105) mittels eines zehnten Schaltelements (149) mit der Abtriebswelle (106) verbindbar ist,
wobei die Antriebswelle (102) mittels eines elften Schaltelements (141, 127) mit dem ersten Sonnenrad (111), mittels eines zwölften Schaltelements (142, 127) mit dem zweiten Sonnenrad (12) und mittels eines dreizehnten Schaltelements (127) mit dem dritten Sonnenrad (13) verbindbar ist,
wobei die zweite Zwischenwelle (105) mittels eines vierzehnten Schaltelements (144, 127) mit dem vierten Sonnenrad (114) und mittels eines fünfzehnten Schaltelements (145, 128) mit dem fünften Sonnenrad (115) verbindbar ist,
wobei das vierte Hohlrad (134) mittels eines sechzehnten Schaltelements (164, 137) mit der Abtriebswelle (106) verbindbar ist,
wobei das achte Schaltelement (128a) eine ausschaltbare Freilaufkupplung (128a) ist,
wobei das vierte (164, 137), fünfte (165, 138), vierzehnte (144, 127) und fünfzehnte (145, 128) Schaltelement jeweils aus einer Schaltkupplung (164, 165, 144, 145) und einer parallel dazu angeordneten Freilaufkupplung (137, 138, 127, 128) bestehen,
wobei das erste (138), das neunte Schaltelement (128) und das dreizehnte (127) Schaltelement jeweils eine Freilaufkupplung (138, 128, 127) sind,
wobei das zweite (162, 138), das elfte (141, 127) und das zwölfte (142, 127) Schaltelement jeweils eine Schaltkupplung (162, 142, 142) mit einer in Reihe geschalteten Freilaufkupplung (138, 127, 127) aufweisen,
wobei alle anderen Schaltelemente jeweils Schaltkupplungen sind.

3. Lastschaltbares Mehrstufengetriebe nach Anspruch 1 oder 2,
**dadurch gekennzeichnet, dass** als Schaltkupplungen lastschaltbare formschlüssige und/oder kraftschlüssige Schaltkupplungen wie Lamellenkupplungen, Konuskupplungen, Bandbremsen, Klauenkupplungen oder Zahnkupplungen vorgesehen sind.

## Claims

1. Power shift multi-gear planetary gear unit
with a shaft drive (2-Fig.1), a first, second and third intermediate shaft (3, 4, 5), an output shaft (6), a basic transmission (23) and an expansion transmission (24),
wherein the basis transmission (23) comprises a first, second and third sun gear (11, 12, 13), a first, second and third ring gear (31, 32, 33) plus a first planet carrier (20) on which a first, second and third planet wheel (21 a, 21 b, 21 c) are arranged,
wherein the first, second and third planet wheel (21 a, 21 b, 21 c) are rigidly connected to one another or consist of a body (21),
wherein the expansion transmission (24) comprises a fourth and fifth sun gear (14, 15), a fourth and fifth ring gear (34, 35) plus a second planet carrier (30) on which a fourth and fifth planet wheel (22a, 22b) are arranged,
wherein the fourth and fifth planet wheel (22a, 22b) are rigidly connected to one another or consist of a body (22),
wherein the first planet wheel (21a) meshes with the first sun gear (11) and the first ring gear (31),
wherein the second planet wheel (21 b) meshes with the second sun gear (12) and the second ring gear (32),
wherein the third planet wheel (21 c) meshes with the second sun gear (13) and the second ring gear (33),
wherein the fourth planet wheel (22a) meshes with the fourth sun gear (14) and the fourth ring gear (34),
wherein the fifth planet wheel (22b) meshes with the fifth sun gear (15) and the fifth ring gear (35),
wherein the first ring gear (31) can be connected to the gearbox housing (GG) by a first switching element (61, 38);
wherein the second ring gear (32) can be connected to the gearbox housing (GG) by a second switching element (62);
wherein the third ring gear (33) can be connected to the gearbox housing (GG) by a third switching element (63, 37);
wherein the fourth ring gear (34) can be connected to the gearbox housing (GG) by a fourth switching element (64, 37);
wherein the fifth ring gear (3 5) can be connected to the gearbox housing (GG) by a fifth shifting element (65, 38);
wherein the shaft drive (2) can be connected to the first planet carrier (20) by a sixth switching element (40);
wherein the first planet carrier (20) can be connected to the second intermediate shaft (4) by a seventh switching element (46),
wherein the second intermediate shaft (4) can be connected to the second planetary carrier (30) by an eighth switching element (48),
wherein the second planet carrier (30) can be connected to the output shaft (6) by a ninth switching element (28a),
wherein the drive shaft (2) can be connected to the first intermediate shaft (3) by a tenth switching element (28),
wherein the first intermediate shaft (3) can be connected to the second intermediate shaft (4) by an eleventh switching element (47),
wherein the second intermediate shaft (4) can be connected to the third intermediate shaft (5) by a twelfth switching element (28),
wherein the third intermediate shaft (5) can be connected to the output shaft (6) by a thirteenth switching element (49),
wherein the first intermediate shaft (3) can be connected to the first sun gear (11) by a fourteenth switching element (41, 28) to the second sun gear (12) by a fifteen switching element (42) and to the third sun gear (13) by a sixteenth switching element (43, 27),
wherein the third intermediate shaft (5) can be connected to the fourth sun gear (14) by a seventeenth switching element (44, 27) and to the fifth sun gear (15) by an eighteenth switching element (45, 28),
wherein the first ring gear (31) can be connected to the second intermediate shaft (4) by a nineteenth switching element (28),
wherein the fourth ring gear (34) can be connected to the output shaft (6) by a twentieth switching element (60),
wherein the ninth switching element (28a) is a disengageable freewheel clutch (28a),
wherein the tenth, twelfth, and nineteenth switching element (28, 28, 28) are each a freewheel clutch (28),
wherein the first (61,38), third (63,37), fourth (64,37), fifth (65,38), fourteenth (41,28), sixteenth (43,27), seventeenth (44, 27) and eighteenth (45, 28) switching elements each consist of a shift clutch and a freewheel clutch arranged parallel thereto,
wherein all the other switching elements being in each case shift clutches.

2. Power shift multi-gear planetary gear unit
with a shaft drive (102-Fig.2), a first and second intermediate shaft (104, 105), an output shaft (106), a basic transmission (123) and an expansion transmission (124),
wherein the basis transmission (123) comprises a first, second and third sun gear (111, 112, 113), a first, second and third ring gear (131, 132, 133) plus a first planet carrier (120) on which a first, second and third planet wheel (121a, 121 b, 121 c) are arranged,
wherein the first, second and third planet wheel (121a, 121b, 121c) are rigidly connected to one another or consist of a body (121),
wherein the expansion transmission (124) comprises a fourth and fifth sun gear (114, 115), a fourth and fifth ring gear (134, 135) plus a second planet carrier (130) on which a fourth and fifth planet wheel (122a, 122b) are arranged,
wherein the fourth and fifth planet wheel (122a, 122b) are rigidly connected to one another or consist of a body (122),
wherein the first planet wheel (121a) meshes with the first sun gear (111) and the first ring gear (131),
wherein the second planet wheel (121 b) meshes with the second sun gear (112) and the second ring gear (132),
wherein the third planet wheel (121c) meshes with the second sun gear (113) and the second ring gear (133),
wherein the fourth planet wheel (122a) meshes with the fourth sun gear (114) and the fourth ring gear (134),
wherein the fifth planet wheel (122b) meshes with the fifth sun gear (115) and the fifth ring gear (135),
wherein the first ring gear (131) can be connected to the gearbox housing (GG) by a first switching element (138);
wherein the second ring gear (132) can be connected to the gearbox housing (GG) by a second switching element (162, 138);
wherein the third ring gear (133) can be connected to the gearbox housing (GG) by a third switching element (163);
wherein the fourth ring gear (134) can be connected to the gearbox housing (GG) by a fourth switching element (164, 137);
wherein the fifth ring gear (135) can be connected to the gearbox housing (GG) by a fifth shifting element (165, 138);
wherein the shaft drive (102) can be connected to the first planet carrier (120) by a sixth switching element (140);
wherein the first intermediate shaft (104) can be connected to the second planet carrier (130) by a seventh switching element (148),
wherein the second planetary carrier (130) can be connected to the output shaft (106) by an eighth switching element (128a),
wherein the first intermediate shaft (104) can be connected to the second intermediate shaft (105) by a ninth switching element (128)
wherein the second intermediate shaft (105) can be connected to the output shaft (106) by a tenth switching element (149),
wherein the shaft drive (102) can be connected to the first sun gear (111) by an eleventh switching element (141, 127) and to the second sun gear (12) by a twelfth switching element (142, 127) and to the third sun gear (13) by a thirteenth switching element (127),
wherein the second intermediate shaft (105) can be connected to the fourth sun gear (114) by a fourteenth switching element (144, 127) and to the fifth sun gear (115) by a fifteenth switching element (145, 128),
wherein the fourth ring gear (134) can be connected to the output shaft (106) by a sixteenth switching element (164, 137),
wherein the eighth shift element (128a) is a disengageable freewheel clutch (128a),
wherein the fourth (164, 137), fifth (165, 138), fourteenth (144, 127) and fifteenth (145, 128) shifting elements each consist of a shift clutch (164, 165, 144, 145) and a freewheel clutch (137, 138, 127, 128) arranged parallel thereto,
wherein the first (138), the ninth shift element (128) and the thirteenth (127) shift element are each a freewheel clutch (138, 128, 127)
wherein the second (162, 138), eleventh (141, 127) and twelfth (142, 127) shifting element each having a shifting clutch (162, 142, 142) with a series-connected freewheel clutch (138, 127, 127),
wherein all the other switching elements being in each case shift clutches.

3. Power shift multi-stage gear transmission according to claim 1 or 2,
**characterized in that** load-shiftable positive-locking and/or non-positive shifting clutches such as lamellar clutches, cone clutches, belt brakes, claw clutches or toothed clutches are provided as shift clutches.

## Revendications

1. **Engrenage planétaire à plusieurs rapports embrayable sous charge**
avec un arbre d'entraînement (2-Fig. 1), un premier, un deuxième et un troisième arbre intermédiaire (3, 4, 5), un arbre entraîné (6), un engrenage de base (23) et un engrenage d'extension (24),
et l'engrenage de base (23) est constitué d'une première, d'une deuxième et d'une troisième roue solaire (11, 12, 13), d'une première, d'une deuxième et d'une troisième couronne (31, 32, 33) ainsi que d'un premier porte-satellite (20) sur lequel sont logés un premier, un deuxième et un troisième pignon satellite (21 a, 21 b, 21c),
et le premier, le deuxième et le troisième pignon satellite (21 a, 21 b, 21c) sont solidement liés les uns aux autres ou sont constitués d'un corps (21),
et l'engrenage d'extension (24) est constitué d'une quatrième et d'une cinquième roue solaire (14, 15), d'une quatrième et d'une cinquième couronne (34, 35) ainsi que d'un deuxième porte-satellite (30) sur lequel sont logés un quatrième et un cinquième pignon satellite (22a, 22b),
et le quatrième et le cinquième pignon satellite (22a, 22b) sont solidement liés l'un à l'autre ou sont constitués d'un corps (22),
et le premier pignon satellite (21a) s'engrène avec la première roue solaire (11) et la première couronne (31),
et le deuxième pignon satellite (21 b) s'engrène avec la deuxième roue solaire (12) et la deuxième couronne (32),
et le troisième pignon satellite (21c) s'engrène avec la deuxième roue solaire (13) et la deuxième couronne (33),
et le quatrième pignon satellite (22a) s'engrène avec la quatrième roue solaire (14) et la quatrième couronne (34),
et le cinquième pignon satellite (22b) s'engrène avec la cinquième roue solaire (15) et la cinquième couronne (35),
et la première couronne (31) peut être connectée au carter d'engrenage (GG) au moyen d'un premier élément de commutation (61, 38);
et la deuxième couronne (32) peut être connectée au carter d'engrenage (GG) au moyen d'un deuxième élément de commutation (62);
et la troisième couronne (33) peut être connectée au carter d'engrenage (GG) au moyen d'un troisième élément de commutation (63, 37)
et la quatrième couronne (34) peut être connectée au carter d'engrenage (GG) au moyen d'un quatrième élément de commutation (64, 37)
et la cinquième couronne (35) peut être connectée au carter d'engrenage (GG) au moyen d'un cinquième élément de commutation (65, 38);
et l'arbre d'entraînement (2) peut être connecté au premier porte-satellite (20) au moyen d'un sixième élément de commutation (40);
et le premier porte-satellite (20) peut être connecté au deuxième arbre intermédiaire (4) au moyen d'un septième élément de commutation (46),
et le deuxième arbre intermédiaire (4) peut être connecté au deuxième porte-satellite (30) au moyen d'un huitième élément de commutation (48),
et le deuxième porte-satellite (30) peut être connecté à l'arbre entraîné (6) au moyen d'un neuvième élément de commutation (28a),
et l'arbre d'entraînement (2) peut être connecté au premier arbre intermédiaire (3) au moyen d'un dixième élément de commutation (28),
et le premier arbre intermédiaire (3) peut être connecté au deuxième arbre intermédiaire (4) au moyen d'un onzième élément de commutation (47),
et le deuxième arbre intermédiaire (4) peut être connecté au troisième arbre intermédiaire (5) au moyen d'un douzième élément de commutation (28),
et le troisième arbre intermédiaire (5) peut être connecté à l'arbre entraîné (6) au moyen d'un treizième élément de commutation (49),
et le premier arbre intermédiaire (3) peut être connecté à la première roue solaire (11) au moyen d'un quatorzième élément de commutation (41, 28), à la deuxième roue solaire (12) au moyen d'un quinzième élément de commutation (42) et à la troisième roue solaire (13) au moyen d'un seizième élément de commutation (43, 27),
et le troisième arbre intermédiaire (5) peut être connecté à la quatrième roue solaire (14) au moyen d'un dix-septième élément de commutation (44, 27) et à la cinquième roue solaire (15) au moyen d'un dix-huitième élément de commutation (45, 28)
et la première couronne (31) peut être connectée au deuxième arbre intermédiaire (4) au moyen d'un dix-neuvième élément de commutation (28),
et la quatrième couronne (34) peut être connectée à l'arbre entraîné (6) au moyen d'un vingtième élément de commutation (60),
et le neuvième élément de commutation (28a) est un embrayage unidirectionnel (28a) pouvant être desactivé,
et le dizième, le douzième et le dix-neuvième élément de commutation (28, 28, 28) sont respectivement des embrayages unidirectionnels
et le premier (61,38), le troisième (63, 37), le quatrième (64-37), le cinquième (65, 38), le quatorzième (41, 28), le seizième (43, 27), le dix-septième (44, 27) et le dix-huitième (45, 28) élément de commutation sont composés respectivement d'un embrayage et d'un embrayage unidirectionnel disposés en parallèle,
et tous les autres éléments de commutation sont respectivement des embrayages.

2. Engrenage planétaire à plusieurs rapports **embrayable** sous charge
avec un arbre d'entraînement (102-Fig.2), un premier et un deuxième arbre intermédiaire (104, 105), un arbre entraîné (106), un engrenage de base (123) et un engrenage d'extension (124),
et l'engrenage de base (123) est constitué d'une première, d'une deuxième et d'une troisième roue solaire (111, 112, 113), d'une première, d'une deuxième et d'une troisième couronne (131, 132, 133) ainsi que d'un premier porte-satellite(120) sur lequel sont logés un premier, un deuxième et un troisième pignon satellite (121a, 121b, 121c),
et le premier, le deuxième et le troisième pignon satellite (121 a, 121 b, 121c) sont solidement liés les uns aux autres ou sont constitués d'un corps (121),
et l'engrenage d'extension (124) est constitué d'une quatrième et d'une cinquième roue solaire (114, 115), d'une quatrième et d'une cinquième couronne (134, 135) ainsi que d'un deuxième porte-satellite (130) sur lequel sont logés un quatrième et un cinquième pignon satellite (122a, 122b),
et le quatrième et le cinquième pignon satellite (122a, 122b) sont solidement liés l'un à l'autre ou sont constitués d'un corps (122),
et le premier pignon satellite (121 a) s'engrène avec la première roue solaire (111) et la première couronne (131),
et le deuxième pignon satellite (121b) s'engrène avec la deuxième roue solaire (112) et la deuxième couronne (132),
et le troisième pignon satellite (121c) s'engrène avec la deuxième roue solaire (113) et la deuxième couronne (133),
et le quatrième pignon satellite (122a) s'engrène avec la quatrième roue solaire (114) et la quatrième couronne (134),
et le cinquième pignon satellite (122b) s'engrène avec la cinquième roue solaire (115) et la cinquième couronne (135),
et la première couronne (131) peut être connectée au carter d'engrenage (GG) au moyen d'un premier élément de commutation (138);
et la deuxième couronne (132) peut être connectée au carter d'engrenage (GG) au moyen d'un deuxième élément de commutation (162, 138);
et la troisième couronne (133) peut être connectée au carter d'engrenage (GG) au moyen d'un troisième élément de commutation (163)
et la quatrième couronne (134) peut être connectée au carter d'engrenage (GG) au moyen d'un quatrième élément de commutation (164, 137)
et la cinquième couronne (135) peut être connectée au carter d'engrenage (GG) au moyen d'un cinquième élément de commutation (165, 138);
et l'arbre d'entraînement (102) peut être connecté au premier porte-satellite (120) au moyen d'un sixième élément de commutation (140);
et le premier arbre intermédiaire (104) peut être connecté au deuxième porte-satellite (130) au moyen d'un septième élément de commutation (148),
et le deuxième porte-satellite (130) peut être connecté à l'arbre entraîné (106) au moyen d'un huitième élément de commutation (128a),
et le premier arbre intermédiaire (104) peut être connecté au deuxième arbre intermédiaire (105) au moyen d'un neuvième élément de commutation (128),
et le deuxième arbre intermédiaire (105) peut être connecté à l'arbre entraîné (106) au moyen d'un dizième élément de commutation (149),
et l'arbre d'entraînement (102) peut être connecté à la première roue solaire (111) au moyen d'un onzième élément de commutation (141, 127), à la deuxième roue solaire (12) au moyen d'un douzième élément de commutation (142, 127) et à la troisième roue solaire (13) au moyen d'un treizième élément de commutation (127),
et le deuxième arbre intermédiaire (105) peut être connecté à la quatrième roue solaire (114) au moyen d'un quatorzième élément de commutation (144, 127), et à la cinquième roue solaire (115) au moyen d'un quinzième élément de commutation (145, 128)
et la quatrième couronne (134) peut être connectée à l'arbre entraîné (106) au moyen d'un seizième élément de commutation (164, 137),
et le huitième élément de commutation (128a) est un embrayage unidirectionnel (128a) pouvant être desactivé,
et le quatrième (164,137), le cinquième (165, 138), le quatorzième (144,127), le quinzième (145, 128) élément de commutation sont composés respectivement d'un embrayage (164, 165, 144, 145) et d'un embrayage unidirectionnel (137, 138, 127, 128) disposé en parallèle,
et le premier (138), le neuvième (128) et le treizième (127) élément de commutation sont respectivement des embrayages unidirectionnels (138, 128, 127),
et le deuxième (162, 138), le onzième (141, 127) et le douzième (142, 127) élément de commutation sont composés respectivement d'un embrayage (162, 142, 142) avec un embrayage unidirectionnel (138, 127, 127) monté en série,
et tous les autres éléments de commutation sont respectivement des embrayages.

3. **Boîte de vitesse à plusieurs étages embrayable sous charge selon revendications 1 et 2, caractérisée en ce que** comme accouplement d'embrayage on a prévu des accouplements d'embrayage par complementarité de formes et/ou par liaison de force, embrayables sous charge comme par exemple un accouplement à lamelles, un accouplement à cône, des freins à bande, des embrayages à crabots ou des embrayages à dents.
